Europäisches Patentamt

European Patent Office

Office européen des brevets

(19)

(11) EP 0 536 357 B1

(12) FASCICULE DE BREVET EUROPEEN

(45) Date de publication et mention
de la délivrance du brevet:
**22.07.1998 Bulletin 1998/30**

(51) Int Cl.⁶: **G06T 11/00**

(86) Numéro de dépôt international:
**PCT/FR92/00252**

(21) Numéro de dépôt: **92908376.4**

(22) Date de dépôt: **19.03.1992**

(87) Numéro de publication internationale:
**WO 92/20032 (12.11.1992 Gazette 1992/28)**

(54) **PROCEDE ET DISPOSITIF D'AIDE A L'INSPECTION D'UN CORPS, NOTAMMENT POUR LA TOMOGRAPHIE**

VERFAHREN UND HILFGERÄT ZUR UNTERSUCHUNG DES KÖRPERS , BESONDERS FÜR DIE TOMOGRAPHIE

METHOD AND DEVICE FOR EXAMINING A BODY, PARTICULARLY FOR TOMOGRAPHY

(84) Etats contractants désignés:
**AT BE CH DE DK ES FR GB GR IT LI LU MC NL SE**

(30) Priorité: **25.04.1991 FR 9105138**

(43) Date de publication de la demande:
**14.04.1993 Bulletin 1993/15**

(73) Titulaire: **INRIA INSTITUT NATIONAL DE RECHERCHE EN INFORMATIQUE ET EN AUTOMATIQUE Rocquencourt F-78153 Le Chesnay (FR)**

(72) Inventeurs:
• **THIRION, Jean-Philippe**
  **F-75012 Paris (FR)**
• **AYACHE, Nicholas**
  **F-75015 Paris (FR)**

(74) Mandataire: **Plaçais, Jean-Yves et al
Cabinet Netter,
40, rue Vignon
75009 Paris (FR)**

(56) Documents cités:
• **PROCEEDINGS OF THE FIRST INT. CONFERENCE ON COMPUTER VISION 8 Juin 1987, LONDON,UK pages 136 - 144; P.GIBLIN: 'Reconstruction of surfaces from profiles'**

## Description

L'invention concerne l'inspection d'un corps, à l'aide de faisceaux d'ondes qui en sortent. Elle s'applique plus particulièrement, mais non exclusivement, à la tomographie.

Les réalisations actuelles en la matière relèvent de ce qu'on peut appeler "tomographie calculée" (voir par exemple le Brevet français No 74 14031, publié sous le No FR-A-2 227 582). Le corps à examiner est traversé par des faisceaux d'ondes. Des capteurs, de position déterminée, reçoivent chacun un faisceau d'ondes qui sort du corps avec une direction déterminée. Pour chaque capteur, les signaux captés ("données brutes"), représentent l'effet cumulé du corps sur le rayonnement, tout au long du trajet du faisceau d'ondes considéré.

En d'autres termes, chaque signal de données brutes représente l'intensité d'un faisceau d'ondes de type donné, qui sort du corps le long d'un axe dit "ligne d'acquisition". L'axe en question peut être désigné par au moins deux paramètres (comme un paramètre de position et un paramètre angulaire). En fonction de ces paramètres d'axes, les données brutes définissent une "image des projections" du rayonnement, dans un espace multidimensionnel que l'on appelle "espace des projections". C'est un espace dual de l'espace réel (l'espace physique d'observation), car à chaque point de l'espace des projections il correspond une droite et une seule de l'espace réel.

La tomographie calculée est fondée sur le principe suivant : si l'on dispose d'un ensemble suffisamment important de signaux de données brutes, relatifs à des lignes d'acquisition qui traversent le corps selon différentes directions, alors il doit être possible de retrouver la variation d'absorption (ou d'émission) du faisceau d'ondes en chaque point du corps étudié.

L'inconvénient de la tomographie calculée est qu'elle exige un nombre considérable de calculs. Il est donc difficile et coûteux de reconstituer en temps réel l'image réelle du corps.

Un but essentiel de la présente invention est au contraire de fournir des moyens qui facilitent l'utilisation en temps réel des informations captées.

Un second but de l'invention est de permettre cette utilisation des informations captées dès le niveau de l'image des projections, c'est-à-dire sans avoir nécessairement à les convertir en données "reconstruites" dans l'espace réel.

Un troisième but de l'invention est de fournir des résultats à partir d'un ensemble restreint de données brutes, alors que la technique antérieure nécessite en principe la connaissance complète de ces données.

Un quatrième but de l'invention est de fournir des résultats plus précis qu'auparavant, concernant les surfaces internes ou externes du corps examiné.

L'invention vise aussi à permettre non seulement le traitement de mesures absolues, mais également celui de mesures "différentielles", obtenues dès le niveau des capteurs.

L'invention vise encore à permettre le pilotage direct d'un appareil d'intervention sur le corps, en particulier en temps réel.

L'invention ouvre encore la voie au suivi dynamique d'objets, là encore à cause de ses potentialités d'opérer en temps réel.

Pour cela, l'invention offre tout d'abord un dispositif d'aide à l'inspection d'un corps.

Ce dispositif va acquérir un ensemble rangé de signaux de données brutes, tel que définis plus haut.

Selon l'invention, les moyens de traitement comprennent des moyens d'analyse différentielle des signaux de données brutes relativement à leurs paramètres d'axes, pour y déterminer des points critiques, où se manifeste un saut d'intensité du signal capté. De la sorte, chacun de ces points correspond à une ligne d'acquisition tangente à une frontière interne (ou externe) du corps examiné. Les paramètres d'axes des points critiques représentent alors, dans leur ensemble, la position d'une partie au moins des frontières du corps.

D'autres caractéristiques et avantages de l'invention apparaîtront à l'examen de la description détaillée ci-après, et des dessins annexés, sur lesquels:

- la Figure 1 est le schéma général d'un appareil de tomographie;

- la Figure 2 est le schéma de fonctionnement d'un appareil d'acquisition uni-dimensionnel à ondes parallèles;

- la Figure 3 est le schéma de fonctionnement d'un appareil d'acquisition uni-dimensionnel à ondes sphériques;

- la Figure 4 est un schéma géométrique illustrant la constitution de l'image des projections, à partir de projections uni-dimensionnelles;

- la Figure 5 est un schéma général d'un dispositif selon la présente invention;

- les Figures 6A et 6B sont des figures géométriques illustrant respectivement une variation d'intensité dans l'image des projections et l'allure d'une "surface caractéristique" correspondante dans l'espace réel;

- la Figure 7 illustre une "surface caractéristique" S, en tant qu'enveloppe de droites;

- Les figures 8A et 8B, respectivement 8C et 8D montrent deux exemples de correspondance entre l'espace réel et l'espace des projections;

- la Figure 9 est un schéma plus détaillé d'une variante selon la présente invention dans l'acquisition des données brutes;

- la Figure 10 est un schéma plus détaillé d'un dispositif de tomographie géométrique directe selon la présente invention;

- la Figure 11 est le schéma des étapes du procédé de tomographie géométrique directe selon l'invention;

- la Figure 12 est un schéma géométrique illustrant la reconstruction d'une approximation polygonale de la surface par intersection de demi-plans;

- la Figure 13 est un schéma fonctionnel d'une technique dite "transformation algorithmique";

- la Figure 14 est un schéma fonctionnel d'une technique dite "transformation géométrique globale";

- la Figure 15 est un schéma fonctionnel d'une technique dite "transformation géométrique locale";

- la Figure 16 est un schéma géométrique illustrant l'usage d'une telle formule géométrique locale de transformation;

- la Figure 17 est un schéma fonctionnel d'une technique dite "rétro-projection";

- la Figure 18 est le schéma fonctionnel du procédé de tomographie géométrique réciproque selon l'invention;

- la Figure 19 est un schéma géométrique illustrant l'amélioration de la position par une transformation locale opérant sur les déplacements;

- la Figure 20 est un schéma géométrique illustrant la mise à jour dynamique de la courbe par utilisation de données locales;

- la Figure 21 est le schéma d'une variante concernant un appareil d'intervention à faisceau d'ondes actif;

- la Figure 22 est un schéma géométrique illustrant l'introduction d'un paramètre u;

- la Figure 23 est un schéma géométrique illustrant la génération des ordres d'activations du faisceau d'ondes actif à partir des contours critiques dans l'espace des projections;

- la Figure 24 est le schéma de principe d'un appareil d'intervention possédant à la fois une source d'ondes d'auscultation et un faisceau d'ondes actif;

- la Figure 25 est un schéma géométrique illustrant le procédé d'intervention utilisé pour générer les ordres d'activation, allié à un suivi dynamique des lignes de contour critique; et

- la Figure 26 est un schéma fonctionnel d'une autre variante intéressante de réalisation.

La présente invention concerne donc un appareil et un procédé de détermination des surfaces internes et externes d'un corps, examiné au moyen de faisceaux d'ondes.

Les propositions connues (telles que celle décrite dans le brevet N° 74-14031) ont pour but la construction d'une image numérique représentative de la variation d'absorption ou d'émission des faisceaux d'ondes à l'intérieur du corps étudié. Leur nom de "tomographie calculée" est parfois abrégé en "CT" ("Computed Tomography").

L'ouvrage "DIGITAL IMAGE PROCESSING TECHNIQUES", Michael P. EKSTROM, Computational Techniques, 1984, Academic Press, décrit théoriquement diverses techniques utiles en tomographie calculée, en son chapitre 4.

La présente invention, dénommée "tomographie géométrique", se distingue par le fait qu'elle permet de déterminer directement et très précisément des surfaces internes ou externes du corps examiné, dites "surfaces caractéristiques", où se manifeste un changement significatif des propriétés du corps, et ce, sans qu'il soit nécessaire de reconstruire une image numérique représentant la variation d'absorption à l'intérieur de ce dernier.

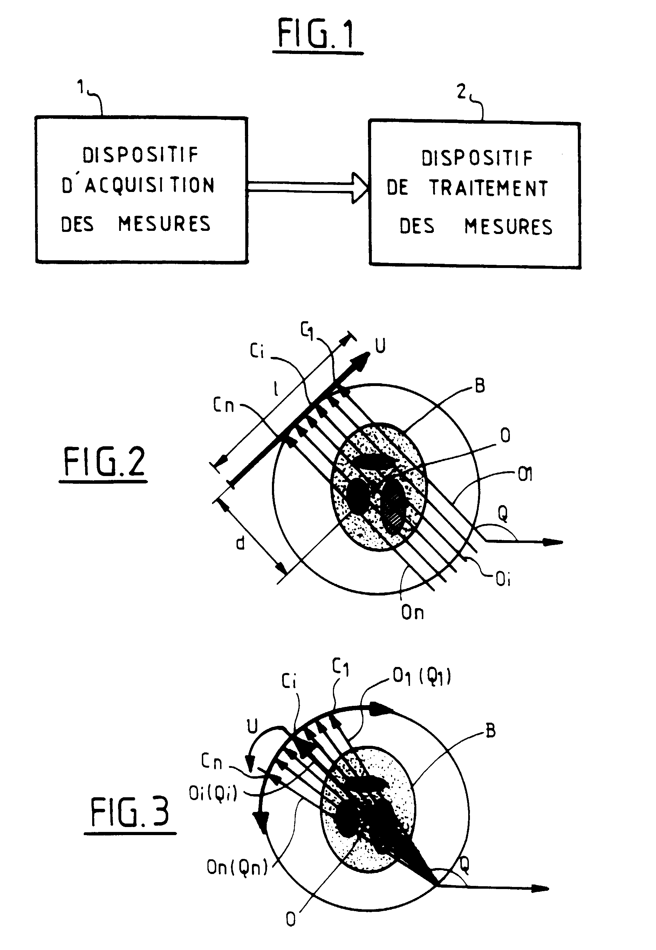

Il faut disposer (figure 1) d'un appareil d'acquisition (1), constitué d'une pluralité de capteurs mesurant les signaux bruts. On rappelle que ceux-ci représentent l'intensité du faisceau d'ondes d'examen (ou "faisceau d'auscultation") qui atteint le capteur suivant une direction précise.

Pour chaque capteur pris à un instant donné, le couple position du capteur/direction d'acquisition est assimilable à une ligne droite appelée "ligne d'acquisition".

L'invention utilise des signaux tirés d'un tel appareil d'acquisition, signaux qu'elle traite (2, figure 1) à l'aide d'une unité de calcul. L'appareil d'acquisition (1) lui-même n'est pas nécessairement incorporé physiquement au dispositif selon l'invention. Mais la façon dont sont acquises les données brutes influe sur le traitement selon l'invention.

Plusieurs modes de réalisation sont envisageables pour l'appareil d'acquisition. Ils se distinguent par la façon d'engendrer les faisceaux d'auscultation et la façon de disposer les capteurs.

En ce qui concerne la génération des faisceaux d'auscultation:

- dans un premier mode, les capteurs et la source des faisceaux d'auscultation se trouvent placés sur un support constituant le dispositif de prise de vue de part et d'autre du corps étudié. Les faisceaux d'auscultation pénètrent à l'intérieur du corps et sont absorbés en fonction des coefficients d'absorption de la matière composant le corps étudié. Les lignes d'acquisition sont définies comme étant les droites reliant la source aux capteurs.

- dans un second mode de réalisation, la source des faisceaux d'ondes n'est plus placée à l'extérieur du corps, mais c'est le corps lui même qui émet les faisceaux d'ondes. Les capteurs permettent de mesurer l'intensité de ces faisceaux d'ondes, chacun selon une direction précise, soit par collimation (techniques dites SPECT pour SINGLE PHOTON EMISSION COMPUTED TOMOGRAPHY), soit par détection de mesures coïncidentes pour des paires de particules émises suivant des directions opposées (techniques PET pour POSITRON EMISSION TOMOGRAPHY).

- Dans un troisième mode de réalisation, les faisceaux d'ondes sont émis par un dispositif étranger au corps et sont ré-émis par les surfaces internes ou externes du corps examiné. C'est le cas d'un corps éclairé par une source extérieure, ou encore celui de l'échographie. Les capteurs mesurent les faisceaux ré-émis par le corps suivant des directions très précises.

En ce qui concerne la manière dont sont obtenues différentes lignes d'acquisition:

- La première manière est de faire tourner l'ensemble source/capteur autour du sujet. En tomographie classique, ce type d'appareil est généralement appelé scanner de "troisième génération".

- La seconde manière consiste à avoir un anneau de capteurs fixes et à faire tourner la source des faisceaux, propriété qui caractérise les scanners de "quatrième génération".

- Enfin, lorsque les capteurs ne sont plus placés dans un plan, mais constituent une surface bi-dimensionnelle, l'appareil obtenu est généralement appelé scanner de "cinquième génération".

Bien que l'invention puisse s'appliquer à tous ces cas, il est préférable, pour la clarté de la description, de prendre le plus simple: auscultation par rayonnement pénétrant; système capteur uni-dimensionnel.

La figure 2 illustre un exemple de réalisation de l'appareil d'acquisition, dans le cas où l'on émet des faisceaux d'ondes parallèles $O1.,.Oi...On$, traversant en ligne droite le corps B, pour atteindre des capteurs $C1...Ci...Cn$, placés en ligne sur un segment de droite de longueur 1, situé à distance d du centre O de l'appareil. En pratique, les faisceaux d'ondes parallèles $O1...Oi...On$ sont souvent constitués d'un seul faisceau d'ondes planes, formant un angle Q avec une direction de référence.

Ce faisceau d'ondes planes et la ligne de capteurs sont en rotation commune autour du centre O de l'appareil. A tout moment, l'angle Q indique la direction d'incidence du faisceau, qui est également la direction perpendiculaire à la ligne de capteurs. Chaque capteur $Ci$ est caractérisé par sa coordonnée de position $Ui$ le long de la ligne de capteurs. On a donc la coordonnée de position $Ui$, qui dépend du capteur considéré, et la coordonnée angulaire $Qi = Q$, qui est à tout instant la même pour tous les capteurs, mais varie en fonction du temps.

La figure 3 illustre un autre exemple de réalisation de l'appareil d'acquisition. Cette fois, les différents faisceaux d'ondes $O1...Oi...On$ sont en "éventail", et les capteurs $C1...Ci...Cn$ sont placés sur un support circulaire. Chaque capteur est désigné par son abscisse curviligne $Ui$ le long du support circulaire. En pratique, les faisceaux d'ondes en éventail $O1...Oi...On$ sont souvent constitués d'un seul faisceau d'ondes sphériques.

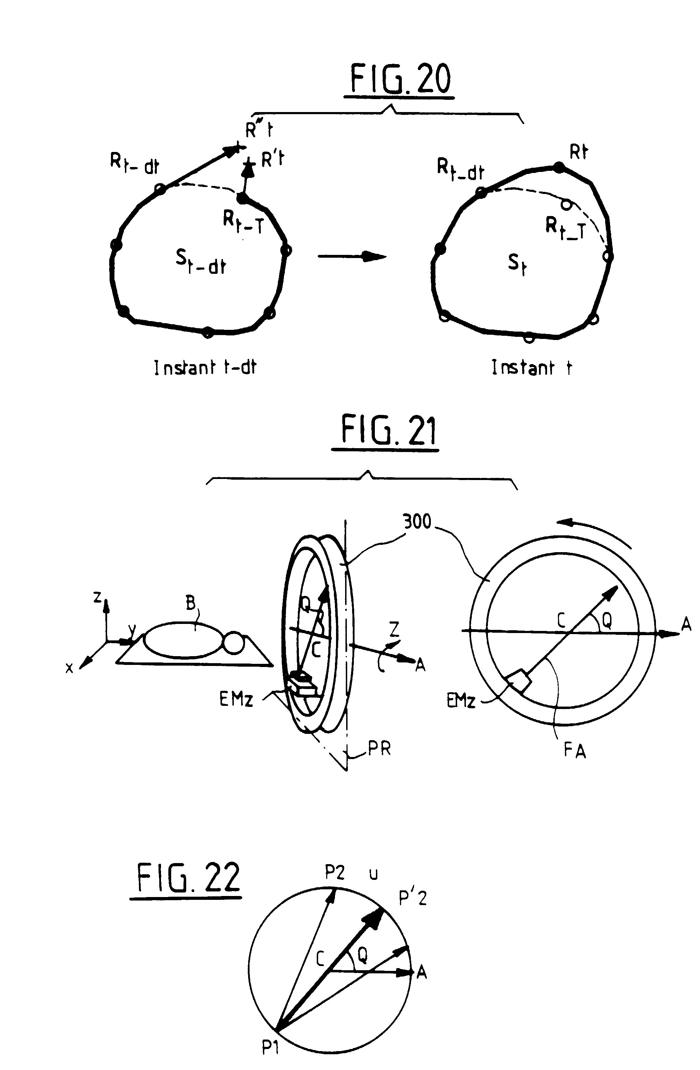

Le système est mobile en rotation autour du centre O du support circulaire. L'angle Q est alors pris entre une direction de référence et l'axe central du faisceau (en gras sur la figure), défini par le point d'émission du faisceau d'ondes sphériques et par le centre de rotation de l'appareil. On prend la coordonnée de position Ui, qui dépend du capteur considéré. Le faisceau Oi arrive sur ce capteur avec un angle Qi égal à Q (avec Q variable en fonction du temps), plus une fonction de Ui qui ne dépend pas du temps. (On décrira plus loin un exemple de ceci, à propos de la figure 22).

D'autres variantes du système d'acquisition peuvent aisément être imaginées, le but de cette partie de l'appareil étant de mesurer des intensités d'ondes suivant une pluralité de lignes d'acquisition.

Une remarque importante est à faire. Le paramètre d'angle Q possède la même signification dans l'espace réel et l'espace des projections, car il représente dans les deux cas la direction de la ligne d'acquisition; par contre, le ou les paramètres de position des capteurs (U,V) n'ont pas de rapport direct avec les positions (x,y) des points considérés dans l'espace réel.

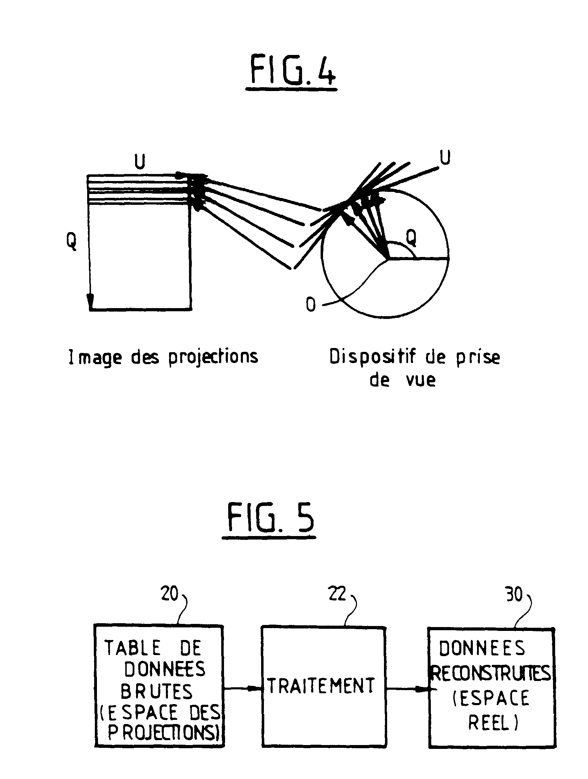

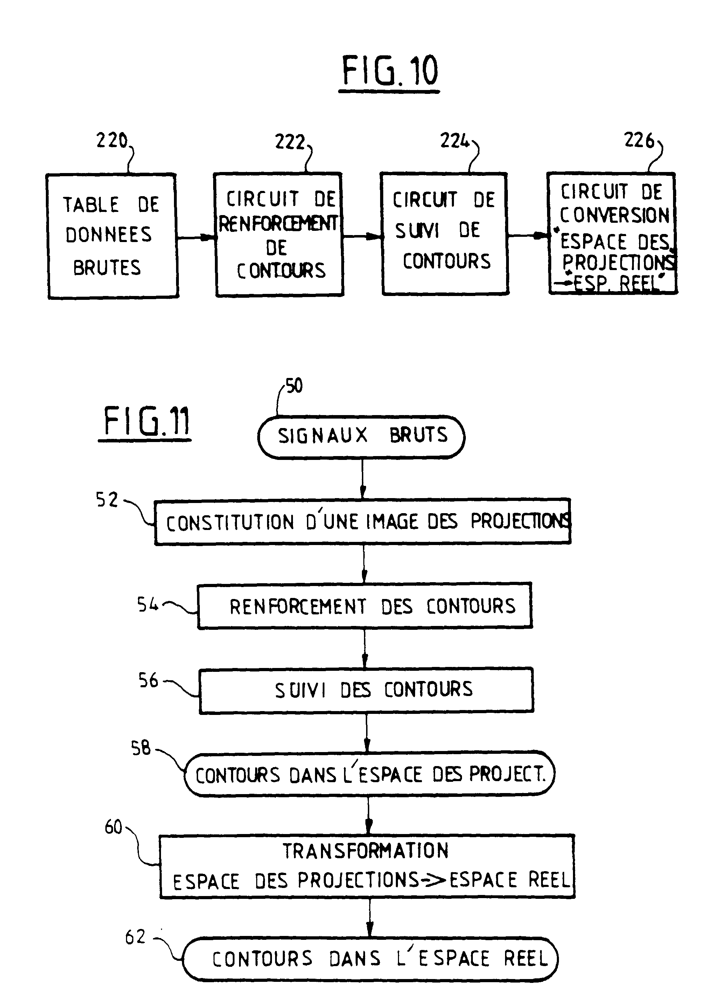

L'appareil selon l'invention (figures 4 et 10) utilise des moyens d'analyse différentielle (moyens de traitement 22), qui comportent:

- des moyens de scrutation (222) pour déterminer l'ensemble des points critiques de l'image des projections où se manifeste un saut d'intensité du signal capté, cette scrutation pouvant se faire par renforcement de contours, ou par d'autres moyens, et
- des moyens de traitement d'image (224), pour déterminer ensuite des contours critiques, formés chacun d'une succession continue de points critiques, c'est à dire de points critiques "liés" pour former ensemble un contour continu (non nécessairement dérivable, au sens mathématique du terme).

Cette détermination de contours critiques continus peut se faire en considérant l'ensemble des points critiques, et en y recherchant des contours obéissant à des conditions géométriques choisies (continuité, notamment), par exemple par les techniques dites "suivi de contours".

La détermination de contours critiques continus peut encore se faire en utilisant d'autres données dont on dispose par ailleurs. Par exemple, on peut comparer des points critiques observés:

- à des points critiques estimés, obtenus par un autre moyen,
- à des modèles de points critiques, reliés ou non à des données réelles.

Les informations ou données définissant ces contours critiques, dans l'espace des projections, sont d'ores et déjà suffisantes pour certaines applications, comme on le verra plus loin. Cependant, il sera souvent nécessaire de convertir les données établies dans l'espace des projections en données dans l'espace réel. Dans certains modes de réalisation, on devra aussi convertir des données établies dans l'espace réel en données dans l'espace des projections.

L'invention vise à déterminer des surfaces caractéristiques ou "frontières" du corps examiné dans l'espace réel en effectuant un extraction ou renforcement de contours directement dans l'espace des projections, puis un suivi de contours.

La technique dite ici "tomographie géométrique" effectue également ce suivi de contours directement dans l'espace des projections.

Elle se distingue donc profondément des techniques classiques, qui ne reconstruisent les surfaces du corps dans l'espace réel qu'à partir d'images obtenues par tomographie calculée.

La présente invention permet notamment d'éviter l'étape longue et coûteuse de la tomographie calculée lorsque le but est de déterminer les surfaces caractéristiques du corps, plutôt que d'obtenir une image numérique représentative de la variation des coefficients d'absorption de ce corps.

En outre, l'invention fournit des informations de position au moins aussi bonnes que celles de la tomographie calculée. Elle permet une meilleure précision pour les informations de tangente et de courbure des surfaces caractéristiques du corps.

On adoptera les notations suivantes:

- Le symbole "F" désigne en principe une forme critique (ligne ou surface) dans l'espace des projections, et "P" un point de cette forme;
- Le symbole "S" désigne en principe une surface caractéristique ou frontière dans l'espace réel, et "R" un point de cette surface.

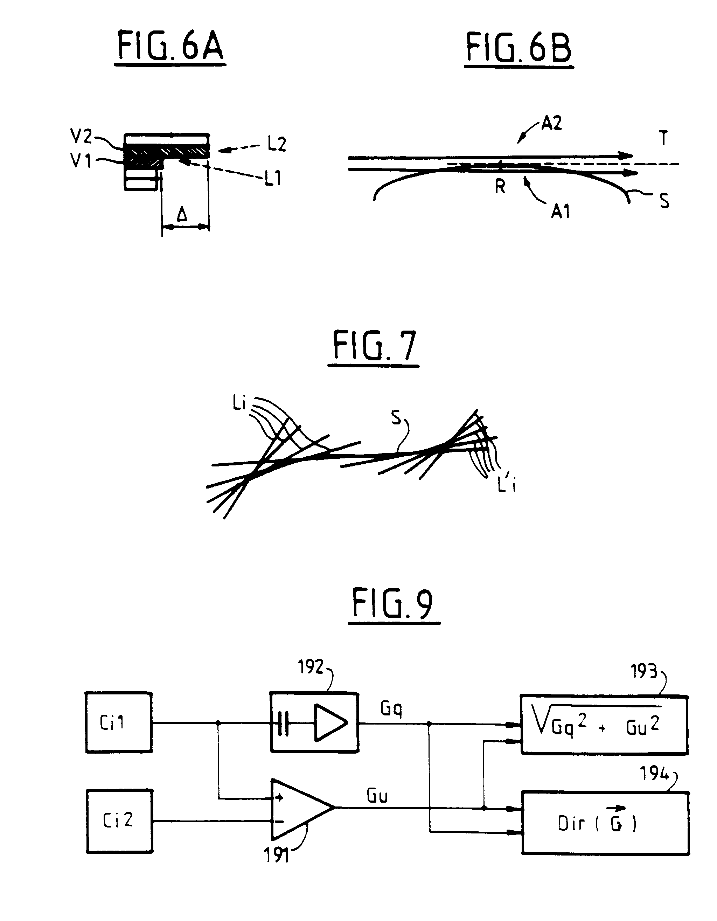

La technique de tomographie géométrique s'appuie sur l'observation suivante, décrite en liaison aux figures 6A, 6B et 7:

la figure 6B montre une surface S, dite "caractéristique", délimitant localement, à l'intérieur du corps examiné, deux zones A1 et A2 voisines dont les propriétés d'interaction avec les faisceaux d'auscultation varient de façon significative de part et d'autre de S. Cette variation significative des propriétés d'interaction peut être une brusque variation d'indice, une brusque variation du coefficient d'absorption, une brusque variation de la quantité d'ondes émises ou ré-émises, par exemple.

On considère deux lignes d'acquisition L1 et L2, ayant des directions très proches l'une de l'autre, et passant au voisinage d'un point R de la surface caractéristique S du corps étudié. Si de plus les directions des deux lignes d'acquisition L1 et L2 sont très proches de la tangente T à la surface S au point R, si enfin l'une de ces lignes d'acquisition, par exemple L1, intersecte localement la surface caractéristique S au voisinage du point R tandis que la seconde, dans ce cas L2, ne l'intersecte pas localement, alors les deux signaux V1 et V2 (figure 6A) mesurés suivant ces deux lignes d'acquisition L1 et L2 vont également présenter un écart significatif (delta).

La conséquence de cette propriété est qu'un point de l'image des projections appartenant à un contour critique correspond à une ligne droite de l'espace réel qui est tangente à une surface caractéristique du corps examiné. La surface caractéristique S est alors l'enveloppe des droites Li, L'i correspondant aux points du contour critique (figure 7).

Cette observation est l'une des bases de la technique de tomographie géométrique de la présente invention. On comprend maintenant que les données relatives aux contours critiques dans l'espace des projections sont déjà une représentation des surfaces caractéristiques S recherchées dans l'espace réel.

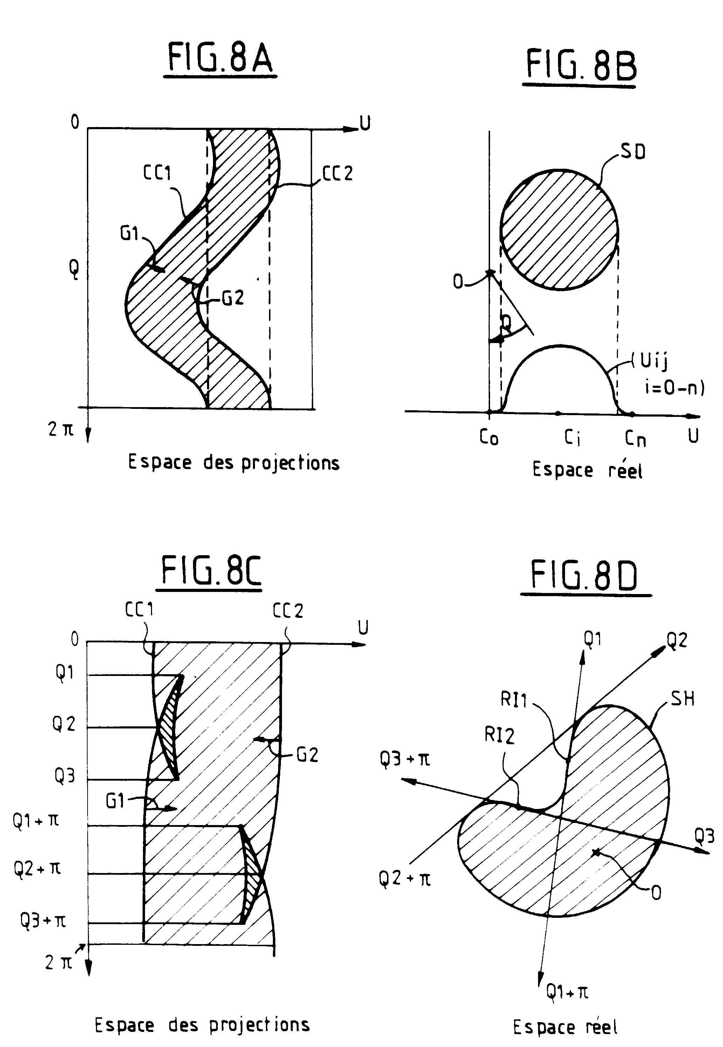

Les figures 8A et 8B montrent un premier exemple de correspondance entre l'espace réel et l'espace des projections, pour une surface entièrement convexe SD (disque). Sur la figure 8B (espace réel, l'axe des abscisses désigne la position U des capteurs. La courbe Ui au bas de la figure (en fait, discrète), pour Q=0, Q désignant la position angulaire de la ligne de capteurs par rapport à la verticale. Il en résulte (figure 8A) un ruban délimité par deux contours critiques CC1 et CC2, entre les angles 0 et deux pi (360° angulaires). Les lignes CC1 et CC2 sont définissables comme des fonctions de la forme U = f(Q), car à une valeur de Q, il correspond une valeur de U et une seule. La figure 8A montre aussi que les gradients G1 et G2 permettent de distinguer l'intérieur (surfaces hachurées) et l'extérieur.

Les figures 8C et 8D montrent un second exemple de correspondance entre l'espace réel et l'espace des projections, pour une surface partiellement concave SH (forme de haricot). Les notations sont les mêmes que précédemment. Mais:

- au niveau de la concavité de SH, on a deux points d'inflexion RI1 et RI2 (fig 8D, espace réel); entre les angles Q1 et Q3, (et leurs homologues supérieurs de pi ou 180°), il y a double définition de U en fonction de Q sur les contours CC1 et CC2 (figure 8C), sauf au croisement qui apparaît pour l'angle Q2 (CC1) ou Q2 + pi (CC2).

Selon une première variante générale, les signaux de données brutes sont exprimés sous forme différentielle. Cette variante de l'appareil peut consister à prévoir le renforcement des contours à l'intérieur du dispositif de prise de vues, près des capteurs.

Chaque signal capté ne correspond alors plus à la mesure de l'intensité du faisceau d'ondes incident, mais à une mesure différentielle d'intensité pour un couple de capteurs voisins, ou pour un même capteur entre deux instants différents.

Un exemple de réalisation (figure 9) consiste à utiliser des couples de capteurs Ci1 et Ci2, chaque couple de capteurs fournissant deux signaux électriques dont la différence d'intensité est traitée à l'aide d'un amplificateur opérationnel 191 monté en soustracteur. Ce type de dispositif sera appelé "dispositif de différentiation spatiale". Il permet de générer directement la valeur de la composante Gu du vecteur gradient de l'image des projections, suivant la direction spatiale "U" dans le cas d'un appareil correspondant à la figure 2 ou 3. Il n'est pas nécessaire de doubler le nombre de capteurs; le couple Ci1 et Ci2 peut être défini à chaque fois par deux capteurs voisins Ci et Ci+1.

On ferait de même suivant les deux directions spatiales "U,V", en considérant au moins trois capteurs voisins (non alignés) d'un support bi-dimensionnel.

Dans le cas de capteurs mobiles autour du corps examiné, on mesure également les signaux bruts correspondant à la dérivée (ou différentielle) au cours du temps de l'intensité du faisceau d'ondes reçue par chaque capteur. Ceci est réalisé (figure 9) à l'aide d'un amplificateur opérationnel 192 monté en différentiateur, et opérant par exemple sur le capteur Ci1. Ce dispositif sera appelé "dispositif de différentiation temporelle".

Pour les appareils de prise de vue fonctionnant par rotation autour d'un axe, le dispositif de différentiation temporelle est utilisé pour générer directement les signaux correspondants au gradient de l'image des projections suivant la dimension angulaire Q. L'appareil de prise de vue peut alors être muni à la fois de dispositifs de différentiation temporelle et spatiale (comme sur la figure 10), de façon à générer directement des signaux correspondant aux différentes composantes du vecteur gradient (spatio-temporel), suivant chacune des coordonnées ou dimensions de l'image des projections multi-dimensionnelle.

Un dispositif supplémentaire (193,194) permet également de transformer par composition les signaux correspondant aux composantes du gradient suivant les diverses dimensions en des signaux correspondant au module du vecteur gradient G et à la direction de ce vecteur gradient G. Ces signaux sont ensuite traités d'une manière décrite plus loin.

Quant au "suivi de contours" (plus généralement la recherche de contours critiques), il peut être conduit sur la seule base de l'image des projections aux contours renforcés, et/ou à l'aide d'autres informations dont on dispose.

Ceci conduit à distinguer maintenant deux modes principaux de réalisation de l'invention: la tomographie géométrique directe et la tomographie géométrique réciproque.

En tomographie géométrique directe, l'invention réalise le suivi de contours à l'intérieur de l'image des projections.

Le suivi de contours est ici le moyen qui permet de déterminer dans l'espace des projections des "formes critiques" (ainsi appelées car ce peuvent être des lignes critiques ou des surfaces critiques), lesquelles correspondent à une estimation des contours critiques.

Une fois ces formes critiques déterminées, la tomographie géométrique directe prévoit de transformer les formes critiques de l'espace des projections en "formes reconstruites" dans l'espace réel, correspondant maintenant aux surfaces caractéristiques du corps examiné.

On peut y distinguer les quatre étapes fonctionnelles énoncées ci-après. Chacune de ces fonctions est réalisée à l'aide d'un circuit intégré spécialisé (figure 10), ou à l'aide d'un calculateur programmable.

(a) Première fonction (bloc 20 figure 5, bloc 220 figure 10).

Les signaux bruts mesurés à chaque intervalle de temps sont regroupés en fonction de la position du capteur, et de la direction de la ligne d'acquisition, au moment de l'acquisition.

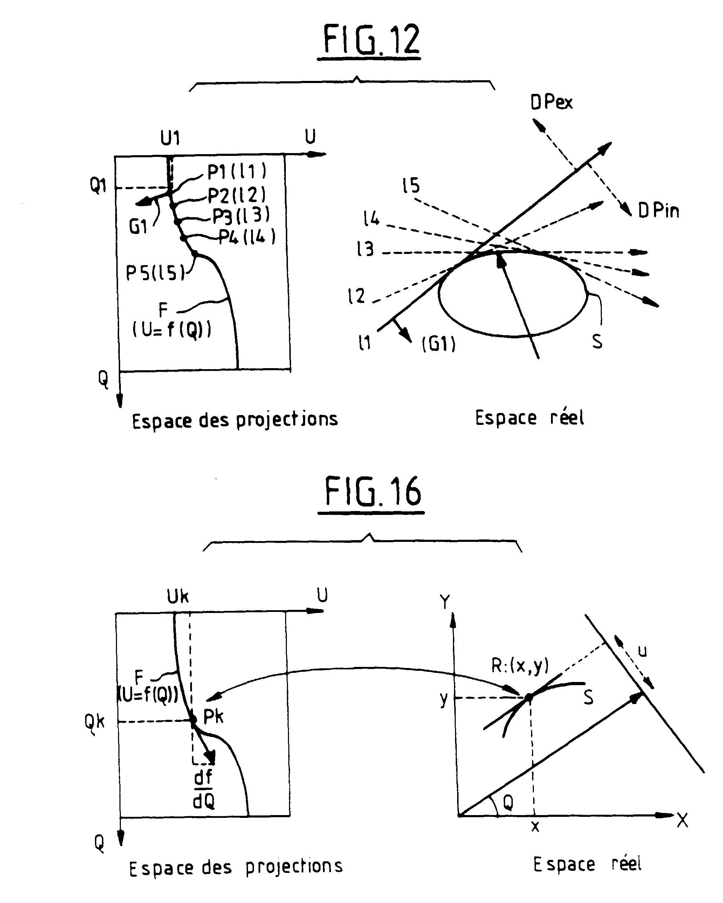

En pratique (figure 11), il y aura acquisition (50) d'un groupe de signaux bruts et constitution (52) d'un tableau multi-di-mensionnel dont chaque case va contenir une représentation de la mesure à un instant donné de l'intensité du faisceau d'ondes suivant une ligne d'acquisition: chaque case correspond à une ligne d'acquisition ayant une position ou une direction différente.

La technique en question n'utilise pas nécessairement tous les signaux bruts (captés). Elle est également applicable à un sous-ensemble des signaux bruts captés, par exemple à ceux appartenant à un voisinage restreint autour d'un point précis de l'image des projections. Par identification à son contenu, ce tableau est appelé ci-après "image des projections", bien qu'il puisse, à un instant donné, ne contenir qu'une partie de cette image.

Dans le cas d'un dispositif de prise de vue selon la figure 2 ou la figure 3, l'image des projections comporte une dimension spatiale U, qui correspond à la position des détecteurs le long de la ligne de détecteurs, et une dimension angulaire Q, qui correspond à l'angle de prise de vue.

La figure 4 montre comment l'image des projections est constituée, par concaténation des projections mono-dimensionnelles, dans le cas des dispositifs de prise de vue des figures 2 ou 3.

Dans le cas d'un appareil possédant une surface bi-dimensionnelle supportant les capteurs, l'image des projections comportera deux dimensions spatiales U,V qui correspondent à la position des capteurs sur leur surface support, et une dimension Q correspondant à l'angle de prise de vue.

Dans un cadre plus général, l'image des projections peut comporter quatre dimensions: deux dimensions spatiales U,V et deux dimensions angulaires Q,Z. Dans tous les cas, l'espace multi-dimensionnel correspondant à l'image des projections sera appelé espace des projections.

(b) Seconde fonction du traitement (bloc 222, figure 10)

Elle fait intervenir un dispositif permettant de réaliser un renforcement des contours à l'intérieur de l'image des projections. En d'autres termes, on détermine l'ensemble des points critiques de l'image des projections où se manifeste un saut d'intensité du signal capté.

En pratique (bloc 54, figure 11), les contours de l'image des projections sont renforcés, par utilisation d'une technique de renforcement ou d'extraction de contours. Des techniques appropriées sont décrites, par exemple:

- le chapitre 3 "Early processing" de l'ouvrage "COMPUTER VISION", Dana H. Ballard & Christopher M. Brown, Prentice-Hall, Inc, Englewood Cliffs, N.J. 07632. 1982;
- le chapitre 1 "Image enhancement" de l'ouvrage de EKSTROM déjà cité.

Un exemple particulier de renforcement de contours est le calcul du gradient ou du laplacien de l'image.

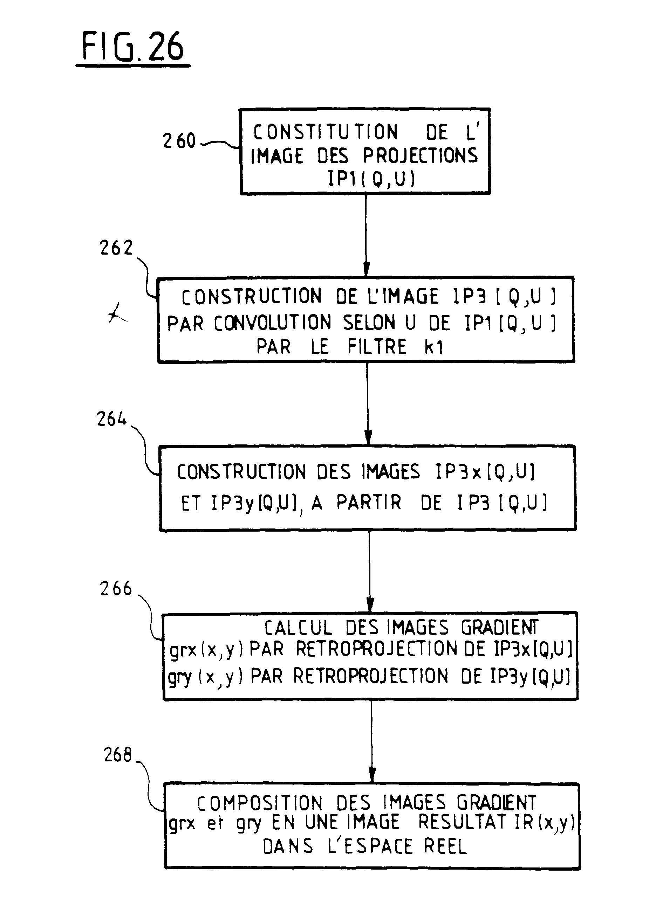

Une variante est actuellement préférée, car elle semble donner des résultats optimaux. Elle sera décrite plus loin de façon complète, en référence à la figure 26. La partie "renforcement de contours" de cette variante réside dans le passage de l'image des projections "IP1" à l'image "IP3", aux contours renforcés.

Ces techniques de traitement du signal sont réalisables en temps réel à l'aide d'un circuit intégré spécialisé, ou au moyen d'un programme fonctionnant sur un calculateur classique.

Cette étape fournit en sortie un tableau informatique multi-dimensionnel correspondant à l'image des projections aux contours renforcés.

Des variantes de ce type de traitement ( chapitre 3 "Early processing" déjà cité) fonctionnent également sur des images multi-dimensionnelles de dimension supérieure à deux, ce qui permet de traiter le cas d'une image des projections de dimension supérieure à deux.

(c) Troisième fonction (bloc 224 figure 10).

Elle consiste à déterminer, à l'intérieur de l'image des projections aux contours renforcés, des lignes de contour correspondant à des variations significatives de l'intensité dans l'image des projections. Les contours présents dans l'image des projections seront appelés "contours critiques", et les lignes correspondant aux contours critiques et détectées par le suivi de contours seront appelées "lignes critiques".

Dans le cas d'un espace des projections de plus de deux dimensions, les "lignes critiques" deviennent des "surfaces critiques", qui sont extraites de contours critiques de dimension n>=2 à l'intérieur de l'image des projections. Dans la suite, l'expression "forme critique" désigne indifféremment une ligne ou une surface critique.

Là encore, on peut utiliser des moyens connus en traitement du signal: moyens dits de "suivi des contours", ou "chaînage des contours", qui fournissent en sortie des listes chaînées de points appartenant aux contours critiques. Des variantes de ce type de moyens existent quelle que soit la dimension de l'image étudiée; voir notamment:

- le chapitre 4 "Boundary detection" de l'ouvrage "COMPUTER VISION", déjà cité.

En pratique (bloc 56, figure 11), un algorithme de suivi de contour est appliqué dans l'image des projections de façon à déterminer les lignes correspondant aux contours critiques dans cette image, c'est à dire, là où se produit une variation significative d'intensité. (Dans le cas d'une image des projections de dimension supérieure à deux, on détermine alors des surfaces critiques).

L'application d'une technique de minimisation globale permet d'affiner encore la précision de la position des lignes ou des surfaces critiques, et de "lisser" ces lignes ou ces surfaces de façon à éliminer le bruit de mesure. De telles techniques sont décrites dans:

- l'article "SNAKES: ACTIVE CONTOUR MODELS", Michael KASS, Andrew WITKIN, et Demetri TERZOPOULOS, International Journal of Computer Vision, Vol.1, pp 321-331, 1987;
- la publication "A FINITE ELEMENT METHOD APPLIED TO NEW ACTIVE COUNTOUR MODELS AND 3-D RECONSTRUCTION FROM CROSS-SECTIONS", Laurent D. COHEN et Isaac COHEN, Rapport de Recherche INRIA N° 1245, Juin 1990.

Les lignes ou les surfaces critiques ainsi obtenues (bloc 58, figure 11) sont définies dans l'espace des projections. Dans certains cas, les listes chaînées de points appartenant aux contours critiques que l'on a obtenues suffisent, car elles représentent déjà les surfaces caractéristiques de l'espace réel. Le plus souvent, cependant, on désire une représentation des surfaces dans l'espace réel, ce que réalise la quatrième fonction ci-après.

(d) Quatrième fonction (bloc 226, figure 10).

Elle consiste alors à transformer les lignes ou les surfaces critiques obtenues dans l'espace des projections (ce qui correspond aux contours critiques dans l'image des projections), en lignes ou en surfaces de l'espace réel, que l'on appellera "lignes ou surfaces reconstruites", (ce qui correspond aux surfaces caractéristiques ou "frontières" du corps examiné). Cette étape de conversion (60 figure 11), réalisée par des moyens propres à l'invention, sera décrite plus loin en détail.

Le dispositif de traitement fournit donc en sortie (62, figure 11) une description géométrique des surfaces caractéristiques ou "frontières" du corps, qui peut être utilisée pour la visualisation, le diagnostic médical, la mesure de caractéristiques géométriques telle que la mesure de longueur, de surface ou de volume de parties du corps étudié, le guidage d'un appareil de construction de prothèses, la planification d'interventions chirurgicales, le guidage d'un appareil intervenant sur le corps examiné, et bien d'autres applications.

Plusieurs variantes de cette conversion (60) sont envisageables, parmi lesquelles:

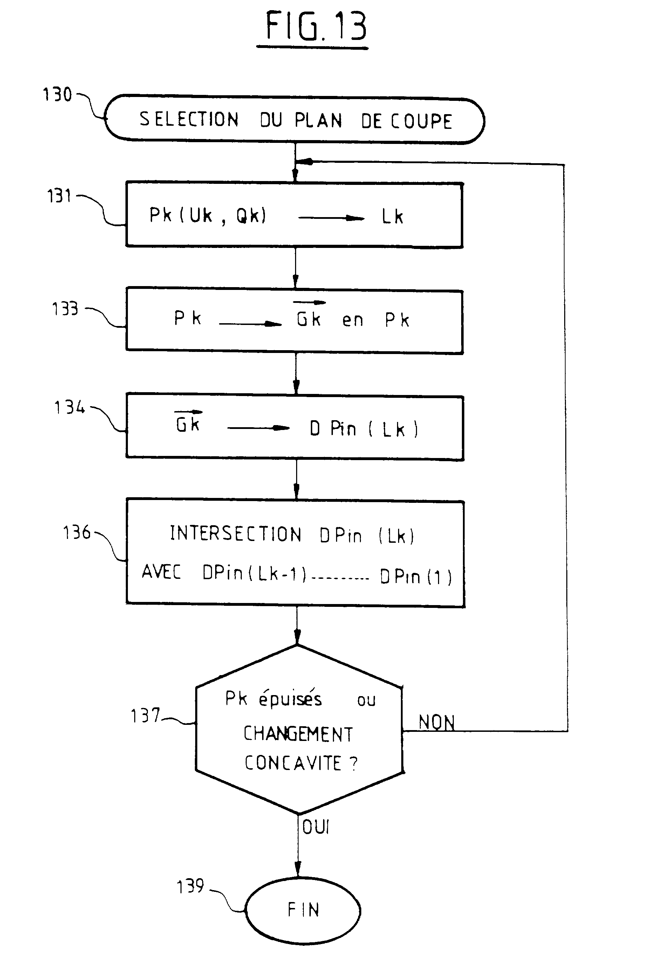

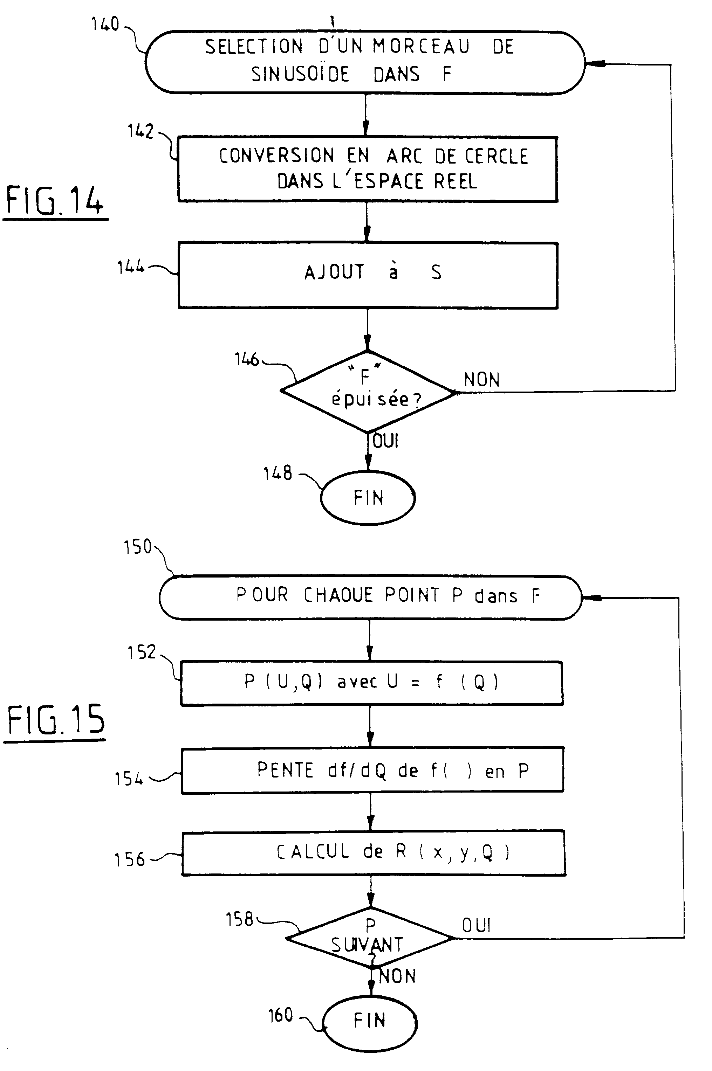

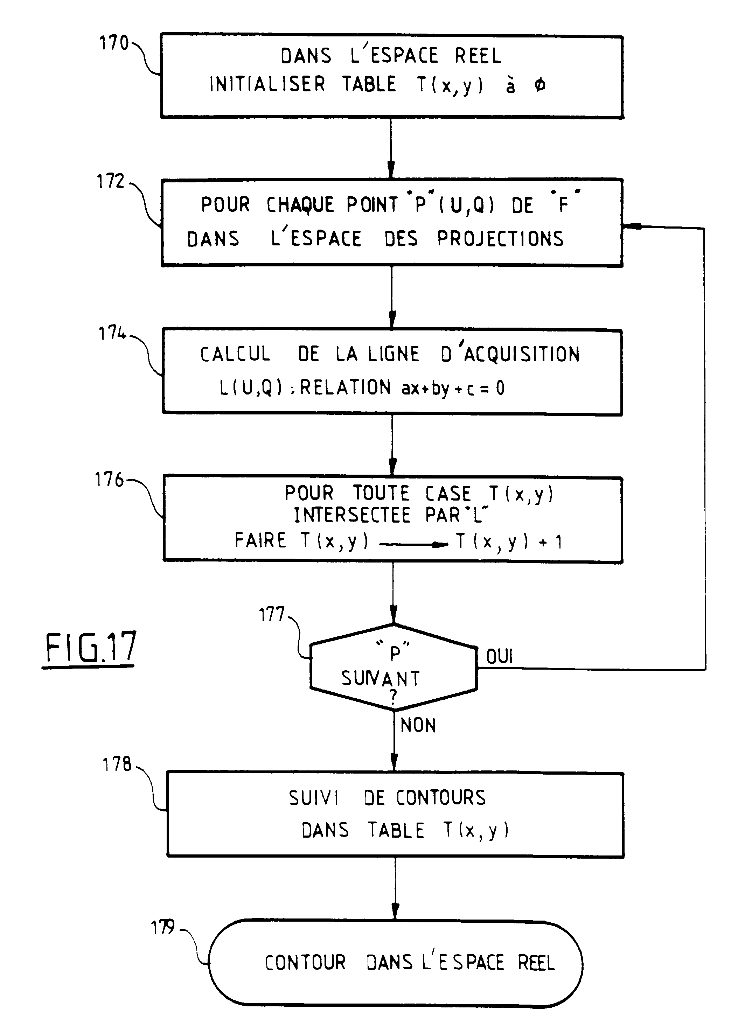

- une transformation dite algorithmique (figure 13);
- une "transformation géométrique globale" (figure 14);
- une "transformation géométrique locale" (figures 15 et 16);
- une transformation par rétro-projection (figure 17).

La transformation algorithmique (figure 13) part de l'observation qu'un point dans l'espace des projections correspond à une ligne d'acquisition dans l'espace réel, assimilable à une droite, et tangente à la surface caractéristique que l'on veut reconstruire.

Le moyen utilisé consiste à traiter ensemble toutes les lignes critiques appartenant à un même plan dans l'espace réel, appelé "plan de coupe" (étape 130). Dans le cas d'un système d'acquisition du type de celui de la figure 2 ou 3, cette condition est réalisée pour toutes les lignes d'acquisition; dans les autres cas, l'information doit être extraite sélectivement.

La transformation algorithmique part d'un échantillonnage de la ligne critique en une liste chaînée de points Pk, illustrés sur la figure 12 pour k = 1 à 5. Chaque point Pk est désigné par des paramètres d'axe Uk et Qk, et il lui est associé un vecteur gradient Gk.

En fonction des paramètres Uk et Qk du point Pk, il lui correspond dans l'espace réel une ligne droite Lk (la ligne d'acquisition), située dans le plan de coupe (étape 131). Du fait que le point Pk appartient à une ligne critique, la droite Lk est tangente à la surface caractéristique S que l'on veut reconstruire. De plus, pour chaque point Pk, la direction du vecteur gradient Gk (déterminé en 133) dans l'image des projections permet de distinguer les deux demi-plans délimités par la droite Lk dans le plan de coupe (134). La direction du gradient (G1 pour P1 et L1) définit un côté par rapport à la ligne critique F. Il lui correspond, dans l'espace réel, un côté par rapport à la ligne d'acquisition L1. Le demi-plan se situant de ce côté de L1 sera appelé demi-plan intérieur DPin, l'autre étant appelé demi-plan extérieur DPex.

L'intersection de la surface caractéristique S (à reconstruire) et du plan de coupe (considéré, ici le plan de la figure 12) défini une ligne de l'espace réel, incluse dans le plan de coupe, et que l'on appellera "ligne caractéristique".

Le moyen proposé pour déterminer cette "ligne caractéristique" consiste à calculer des lignes polygonales correspondant à des parties convexes ou concaves des lignes caractéristiques. Ces lignes polygonales sont calculées comme étant le contour de l'intersection d'une suite consécutive de demi-plans tous intérieurs, ou tous extérieurs (étape 136). Ceci opère (137, 139) jusqu'à épuiser la liste des points Pk, ou jusqu'à un changement de concavité, le cas échéant.

Dans le cas d'un système d'acquisition du type de la figure 2 ou de la figure 3, toute fonction U=f(Q), définissant une ligne critique, correspond à une partie entièrement convexe ou entièrement concave de la surface à reconstruire . Dans le cas contraire, on ne peut pas écrire U sous la forme f(Q): à un même angle Q, il va correspondre plusieurs valeurs de U; mais on peut décomposer un tel contour en parties dont chacune est soit entièrement concave, soit entièrement convexe (voir par exemple le "haricot" des figures 8C et 8D).

On décrira maintenant la transformation géométrique dite globale (figure 14).

Elle consiste à trouver (localement, au moins) une formulation analytique des formes critiques dans l'espace des projections, pour laquelle la transformation mathématique dans l'espace réel est connue.

Dans le cas d'une image des projections bi-dimensionnelle U,Q fournie par un appareil selon la figure (1), un exemple de réalisation consiste à décomposer (140) une ligne critique F en morceaux de sinusoïdes de la forme:

$$u = a + b \cos(q + d),$$

car on sait que ce morceau de sinusoïde de l'espace des projections admet pour transformée (142) dans l'espace réel un morceau du cercle de rayon a et de centre (b,d) en coordonnées polaires.

On reconstruit ainsi (144) les lignes correspondant aux surfaces critiques du corps sous la forme d'une succession d'arcs de cercle, jusqu'à traiter toute la forme critique F considérée (146 et 148).

Un moyen de déterminer les morceaux de sinusoïdes approximant le contour critique est d'utiliser la méthode de Hough (voir chapitre 4 de l'ouvrage COMPUTER VISION déjà mentionné, notamment paragraphe 4.3) pour des sinusoïdes, à partir de l'image des projections.

On décrira maintenant la transformation géométrique locale (figure 15, avec l'exemple de la figure 16).

Cette transformation permet de déterminer pour chaque point P d'une forme critique F de l'espace des projections (150), un point R de l'espace réel appartenant à la surface caractéristique S correspondante.

Cette transformation va dépendre des caractéristiques de l'espace des projections. La formule de transformation permet de déduire les coordonnées du point R dans l'espace réel, à partir des coordonnées du point P dans l'espace des projections, et des caractéristiques différentielles de la forme F au point P. sur la figure 15, on admet (152) que U = f(Q).

La formule est obtenue en considérant un déplacement infinitésimal autour du point P appartenant à une forme critique F dans l'espace des projections. Le point et le point déplacé correspondent à deux lignes d'acquisition dans l'espace réel. Dans le cas où ces droites sont coplanaires, Le point R est l'intersection de ces deux droites quand la valeur du déplacement tend vers 0. Les coordonnées du point R sont calculées par un développement limité de F autour du point P. La forme la plus simple est la pente de la fonction f(Q) au point P (bloc 154). L'étape 156 en déduit les coordonnées (x,y) du point R de la surface caractéristique S dans l'espace réel.

Ceci est répété (158) pour tous les points de F.

La même technique permet d'obtenir des caractéristiques différentielles de S au point R, telle que la tangente, la normale, la courbure, notamment, à l'aide de l'angle Q.

La formule de transformation générale (cas à trois dimensions et plus) se déduit du "théorème de l'enveloppe", décrit notamment par Régis VAILLANT dans:

- "USING OCCLUDING CONTOURS FOR 3-D OBJECT MODELING", First European Conf. on Computer Vision, Antibes, Avril 1990, Springer Verlag;
- "GEOMETRIE DIFFERENTIELLE ET VISION PAR ORDINATEUR: DETECTION ET RECONSTRUCTION DES CONTOURS D'OCCULTATION DE LA SURFACE D'UN OBJET NON POLYEDRIQUE", Chapitre 5 de la Thèse de Doctorat en Sciences présentée à l'Université de Paris-Sud, Centre d'Orsay, 19 Décembre 1990, notamment formules 5.21, page 65.

Un exemple de formule de transformation locale, dans le cas d'un système d'acquisition du type de celui de la figure 2 est illustré par la figure 16. La formule de transformation est

$$x= - \sin(Q).f(Q) - \cos(Q).df(Q)/dQ$$

$$y= + \cos(Q).f(Q) - \sin(Q).df(Q)/dQ$$

où x et y sont les coordonnées du point R reconstruit dans le plan de coupe, où la fonction f() définit une ligne critique F dans l'image des projections, avec Q l'angle de prise de vue et U=f(Q) la position du capteur le long de la droite en rotation. En d'autres termes, (U,Q) sont les coordonnées du point P dans l'image des projections et f() est l'équation de la ligne critique F.

De plus, Q donne la direction de la tangente à la surface caractéristique S en R. Ceci donne la formule de transformation qui permet de passer de P(f(Q),Q,df(Q)/dQ) à R(x,y,Q). La précision de la reconstruction dépend de la précision avec laquelle on réussit à déterminer f(Q), donc de la précision du suivi de contours de l'étape (c) précédente, mais également de la précision de la détermination de la pente de la fonction f au point Q (précision améliorée selon l'invention).

Reste à considérer la transformation par rétro-projection. Cette technique part d'un échantillonnage de la forme critique obtenue par détection et suivi des contours dans l'image des projections.

Le procédé de rétro-projection (figure 17) consiste d'abord à définir (170) une table ou grille de discrétisation T(x, y) dans l'espace réel, initialisée par exemple à 0.

Pour chaque point P échantillonné de la forme critique dans l'espace des projections (étapes 172 et 177), on détermine (174) la ligne d'acquisition correspondante. Pour chaque case de la grille T(x,y) traversée par cette ligne, T(x,y) est incrémenté (176) d'une valeur associée au point de la forme critique et appelée "coefficient de confiance" ( supposé pour simplifier égal à 1 sur le dessin).

Ce coefficient de confiance reflète la confiance que l'on accorde au fait que ce point de la forme critique appartient bien à un contour critique. Par exemple, le coefficient de confiance peut être tiré de la valeur du module du gradient de l'image des projections au point considéré.

A la grille de discrétisation correspond donc une image bi-dimensionnelle lorsque l'on s'intéresse à une coupe du corps examiné (ou tri-dimensionnelle dans le cas général), pour laquelle la valeur contenue dans chaque case sera d'autant plus importante que l'on aura de chances de se trouver sur une surface caractéristique du corps examiné.

On applique alors à nouveau un suivi de contour (178), cette fois-ci dans l'espace réel, de façon à retrouver la ligne (ou la surface) de l'espace réel correspondant à une surface caractéristique du corps (179).

On passe maintenant à la description de la technique de tomographie géométrique réciproque. Elle opère à l'envers, comme son nom l'indique, et par approximations successives.

Son point de départ est une approximation initiale (ou estimation) S0 dans l'espace réel d'une surface caractéristique S du corps examiné.

On fait évoluer cette approximation intiale, en passant par une série de versions intermédiaires Sj, vers une version reconstruite définitive Sp, représentant au mieux la surface caractéristique S. Ceci ressemble à la technique généralement appelée "utilisation de modèles déformables pour le suivi de contours". Des exemples en sont décrits dans:

- l'article KASS, WITKIN et TERZOPOULOS déjà cité;
- et surtout la publication INRIA de COHEN et COHEN, déjà citée.

La tomographie géométrique réciproque se distingue des procédés classiques par le fait qu'elle utilise l'image des projections pour calculer la mise à jour de la surface caractéristique (estimée) dans l'espace réel.

Une utilisation de cette tomographie géométrique réciproque est l'amélioration de la précision concernant la position des surfaces caractéristiques du corps, car ce procédé permet d'éviter la perte d'information (tangente, courbure) rencontrée avec la tomographie calculée des scanners classiques.

Une autre utilisation de la tomographie géométrique réciproque est le suivi des déformations et des mouvements des surfaces caractéristiques du corps au cours du temps, appelé également "suivi dynamique de contours" ou "tracking".

Pour le suivi dynamique de contours, on utilise les formes critiques obtenues lors d'une prise de vue à un instant donné t, (et converties en surfaces caractéristiques dans l'espace réel) comme base pour le calcul des surfaces caractéristiques à l'instant suivant t + dt. Il est rappelé qu'à une surface caractéristique dans l'espace réel, il correspond toujours une forme dans l'espace des projections, dénommée "forme duale associée". Cette forme duale peut être une ligne dans le cas d'une image des projections bi-dimensionnelle, ou une surface dans le cas général.

Le calcul de la forme duale est immédiat pour tous les points de la forme dans l'espace réel pour lesquels on peut calculer la direction de la tangente s'il s'agit d'une ligne, ou pour lesquels on peut calculer le plan tangent, s'il s'agit d'une surface.

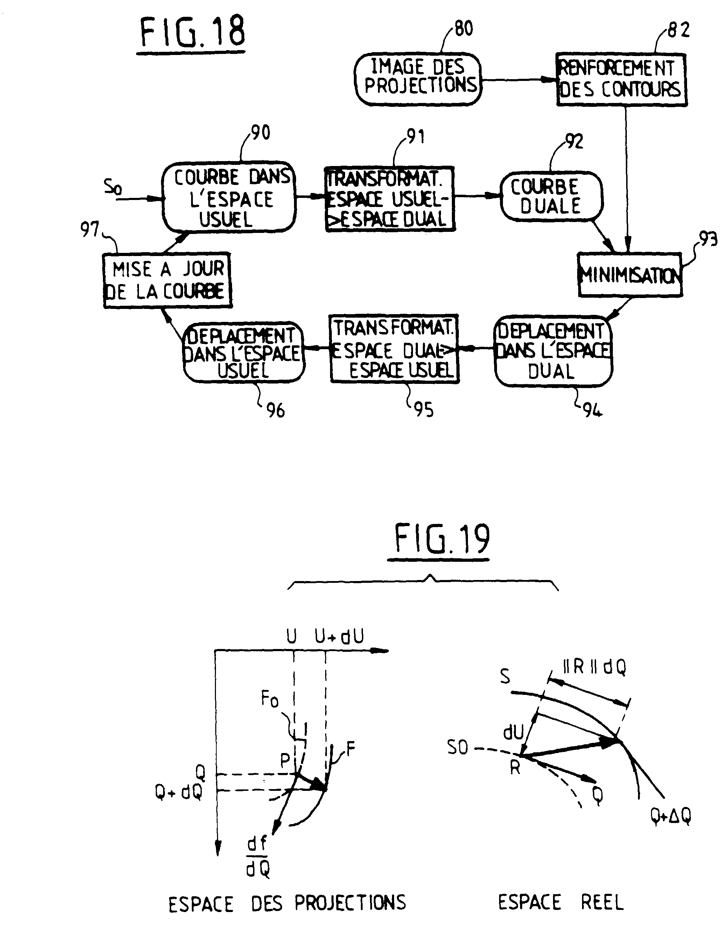

Un exemple de réalisation du procédé de tomographie géométrique réciproque est décrit par le schéma fonctionnel de la figure 18.

Au départ, on a préparé une image des projections (80), puis réalisé un renforcement de ses contours (82). Les étapes suivantes d'approximations successives sont:

- préparation (90) d'une version approximative initiale S0, dans l'espace réel, de la surface caractéristique que l'on cherche à reconnaître. A titre d'exemple, cette forme approximative peut être donnée manuellement par l'utilisateur du procédé, ou provenir de l'application du procédé de tomographie géométrique directe, ou encore être le résultat d'un suivi de contour classique sur une image obtenue par tomographie calculée.

- transformation (91) de la forme S0 en sa forme duale F0 appartenant à l'espace des projections, stockée en (92).

- calcul (93), pour chaque point de la forme duale F0, d'un déplacement dans l'espace des projections qui rapproche cette forme duale F0 du contour critique le plus proche dans l'image des projections. Ceci est une "minimisation" de l'écart entre F0 et ledit contour critique le plus proche. Après minimisation, il subsistera néanmoins un écart entre F0 et la forme F'0 à écarts "minimisés".

- détermination (94) des déplacements qu'il faut appliquer à la forme F0 pour obtenir la nouvelle forme F'0 dans l'espace des projections, plus proche du contour critique exact F.

On en déduit également un "résidu d'erreur" qui représente en quelque sorte la distance résiduelle existant entre la forme estimée F'0 et la forme exacte F.

On calcule ensuite une nouvelle forme S'0 dans l'espace réel, à partir de F'0, de ses caractéristiques différentielles, et d'une formule de transformation géométrique locale.

Une variante dans l'obtention de S'0 consiste non pas à transformer globalement F'0 en S'0, mais:

. à considérer chaque déplacement qui permet d'amener un point de F0 en un point de F'0 dans l'espace des projections, et
. à le transformer en un déplacement dans l'espace réel qui amène un point de S0 en un point de S'0.

En d'autres termes, cela revient à appliquer une formule de transformation géométrique locale qui opère sur les déplacements au lieu d'opérer sur les positions.

La figure 18 est établie pour le cas de déplacements. En conséquence:

- on transforme (95) les déplacements de l'espace des projections en déplacements dans l'espace réel, stockés en (96).

Selon ce qui est dit ci-dessus, la forme F'0 deviendrait une version S'0 dans l'espace réel.

En pratique, l'opération de conversion s'accompagne d'un filtrage de lissage, de façon à réduire les irrégularités qui sont apparues lors de la transformation de F0 en F'0. Cette opération de lissage peut être réalisée par des techniques classiques en traitement du signal.

- On stocke alors (97) la version S1 ainsi obtenue dans l'espace réel.

Une variante consiste à effectuer le lissage sur F'0 dans l'espace des projections avant transformation en S'0.

Une autre variante consiste à imposer des critères de rigidité aux formes Fi ou Si utilisées, en cherchant par exemple à minimiser la courbure de ces formes.

Si le nombre d'itérations effectuées dépasse un nombre d'itération fixé p, ou si le résidu d'erreur devient inférieur à un seuil fixé, la forme Sp obtenue est considérée comme étant une approximation suffisante de S, et devient le résultat du procédé. Sinon, on est ramené à l'étape (90), où l'on remplace S0 par la nouvelle forme S1 que l'on a obtenue.

Un exemple plus précis de ce procédé, dans le cas d'un dispositif de prise de vue du type de celui décrit dans la figure 2 et générant une image des projections "U,Q" est illustré sur la figure 19.

Il consiste à chercher des déplacements pour F0 dans l'espace des projections suivant des lignes perpendiculaires à la courbe F0. Si F0 est définie par une fonction U=f(Q), pour un point P de coordonnées (U=f(Q),Q), on cherche le contour critique le plus proche de P dans l'image des projections, suivant une direction perpendiculaire à la courbe F en Q.

On calcule ainsi un petit déplacement (dU,dQ) dans l'espace des projections, que l'on traduit dans l'espace réel par un déplacement du point R0 de S0 en un point R'0 de S'0.

Il est supposé que la courbe S0 est représentée par une liste chaînée de points, chaque point étant défini par un triplet (x,y,Q) où (x,y) sont les coordonnées du point dans l'espace réel et Q l'angle qui indique la direction de la tangente (et par conséquent de la normale) à S0 en ce point.

On transforme S0 en une liste chaînée de points F0 de l'espace des projections; c'est à dire que l'on transforme chaque point (x,y,Q) de S0 en un point (U,Q,df(Q)/d(Q)) de F0.

On calcule ensuite une liste chaînée de points représentant F'0 en transformant

(U,Q, df(Q)/d(Q) ) en (U+dU, Q+dQ, df(Q)/d(Q) ).

Enfin, on transforme S0 en une liste chaînée de points de l'espace réel S'0 en transformant chaque point (x,y,Q) de S0 en un point (x',y',Q') de S'0, avec:

$$x' = x - \sin(Q).dU - y.dQ,$$

$$y' = y + \cos(Q).dU + x.dQ,$$

$$Q' = Q + dQ.$$

L'homme de l'art comprendra qu'il s'agit d'une formule de "transformation locale", mais appliquée aux déplacements.

En coordonnées polaires, rapportées à la normale à S0 au point R, les déplacements sont:

dU, et dQ fois le module du vecteur OR,

où module de OR est $(x^2+y^2)^{1/2}$.

S1 est obtenue à partir de S'0, en effectuant un lissage les valeurs (x',y',Q') de la courbe S'0, prenant en compte un critère de continuité concernant la position des points et la direction des tangentes.

Le procédé de tomographie géométrique réciproque permet donc d'améliorer le placement des surfaces estimées par rapport aux surfaces caractéristiques réelles du corps étudié, et de suivre les déplacements et les déformations de ces surfaces au cours du temps.

Le cas du suivi dynamique est particulièrement bien adapté, car le traitement opérant sur les signaux bruts pour mettre à jour les formes correspondant aux surfaces caractéristiques est très localisé.

A titre d'exemple, on considérera le cas d'un système d'acquisition suivant la figure 1, pour lequel l'angle de prise de vue Q(t) varie linéairement avec le temps, avec une période de rotation T.

On suppose que l'appareil permet n valeurs différentes d'angle de vue, le temps séparant chaque prise de vue étant dt= T/n.

On se place à un instant t (les indications de temps sont mises ci-après entre crochets, lorsqu'elles sont associées à d'autres symboles; sur les dessins, elles sont en indice).

Il est supposé que l'on a déjà déterminé pour une révolution complète, entre t-T et t-dt, donc à partir de n vues différentes, la position d'une forme F[t-dt] correspondant à une surface caractéristique S[t-dt] du corps observé (figure 20).

Il est supposé de plus que F[t-dt], forme duale associée à S[t-dt] est définie par une fonction U=f[t-dt](Q).

On détermine alors une nouvelle forme S[t], qui possède tous les points de S[t-dt] sauf R[t-T], lequel est remplacé par un nouveau point R[t]. Le point R[t] de S[t] sera associé au point P[t] de F[t] correspondant à l'angle Q[t] (une fonction du temps Q(t) ). Au tour précédent, et pour le même angle Q[t]= Q[t-T], on avait un point R[t-T] de la version S[t-T] de la surface caractéristique S.

La fonction définissant F[t-T], qui est la forme duale associée à S[t-T] est:

$$U=f[t-T] (Q)$$

On définit également:

$$U[t-T]= f[t-T](Q[t])$$

Le point R[t] va être déduit:

- d'une part d'une extrapolation de la version S[t-dt],
- d'autre part de la mesure des signaux bruts obtenue pour les capteurs situés à proximité de la position U[t-T] sur la ligne de capteurs et pour des angles situés autours de Q[t], en d'autres termes à partir d'un groupe de signaux bruts ( U[t-T] ± dU, Q[t] ± dQ ).

Dans le cas où l'on possède une image des projections, cela revient à explorer une petite fenêtre dans cette image, autour du point (U[t-T], Q[t]). Le calcul se fait en recherchant, le long de la perpendiculaire à la forme duale F[t-T] au point (U[t-T], Q[t]), le point de contour critique le plus proche, ce qui fournit le déplacement (Du,Dq). On en déduit un déplacement Dx, Dy avec:

$$Dx= -\sin(q).Du - y.Dq$$

$$Dy= \cos(q).Du + x.Dq$$

qui amène le point P[t-T] dans une position P'[t].

L'homme de l'art comprendra qu'il s'agit d'une formule de "transformation locale", mais appliquée aux déplacements.

La position finale P[t] est un compromis entre la position d'un point P"[t] extrapolé à partir de la forme S[t-dt], et la position du point P'[t] obtenu en recherchant le contour critique le plus proche dans l'espace des projections. La pondération entre les positions P"[t] et P'[t] est ajustée pour régler le degré de lissage des courbes S[t] comme on le désire.

Le procédé de tomographie géométrique réciproque permet donc de déterminer pour chaque intervalle de temps dt une nouvelle courbe S[t] représentant une surface caractéristique du corps examiné. Il permet ainsi le suivi en temps réel des déplacements et déformations de cette surface.

A titre d'exemple, si la période de rotation du dispositif de prise de vue est de 10 secondes, et que le nombre d'angles de prise de vue est de 256, le procédé permet de mettre à jour la position de la courbe sur 1/256ième de sa longueur en 1/25ième de seconde.

De plus, le procédé ne nécessite la mesure que de quelques capteurs seulement autour de la position obtenue au tour précédent, ce qui permet par exemple de réduire la zone balayée par les faisceaux d'auscultation, et par là même la quantité d'ondes reçue par le corps examiné.

Un autre but de cette invention concerne un appareil permettant le suivi en temps réel des mouvements ou des déformations de surfaces caractéristiques du corps examiné évoluant au cours du temps. L'invention permet de mettre à jour de façon très rapide la position des surfaces caractéristiques entre une prise de vue et la suivante.

L'appareil est constitué d'un dispositif de prise de vue et d'un calculateur. Le dispositif de prise de vue est semblable à l'un de ceux décrits précédemment, et le calculateur exécute un programme correspondant au procédé de tomographie géométrique réciproque.

Un autre but de cette invention est de réaliser un appareil et un procédé d'intervention permettant d'agir à l'intérieur d'un corps à l'aide d'un ou plusieurs faisceaux d'ondes, appelés "faisceaux d'ondes actifs", chaque faisceau actif est focalisé suivant une direction précise, assimilable à une droite et appelée "ligne d'action". Ces faisceaux actifs sont disposés de façon à passer par un point précis du corps, appelé "point cible". L'invention se caractérise par le fait qu'elle utilise, pour planifier le guidage des faisceaux actifs, des lignes ou des surfaces critiques définies dans l'espace des projections et correspondant aux contours critiques associés aux surfaces caractéristiques du corps traité. Le but de l'invention est d'éviter que les faisceaux actifs ne pénètrent à l'intérieur de régions délimitées à l'intérieur du corps, et appelées "zones protégées".

Une réalisation d'un appareil d'intervention suivant l'invention se compose:

(a) d'un support mobile circulaire 300 (figure 21) sur lequel se trouvent placés un ou plusieurs générateurs de faisceaux actifs;
(b) d'une unité de calcul et d'une mémoire.

Le support mobile est capable d'effectuer des déplacements en rotation autour de son centre C, dans un plan appelé "plan de rotation". Un dispositif permet également de faire varier la direction du plan de rotation au cours du temps en faisant tourner le plan de rotation autour d'un axe A contenu dans le plan horizontal passant par le centre de rotation C. La mise en mouvement rapide du support mobile permet de réduire la quantité d'ondes reçue par le corps dans les zones périphériques du corps, et de la concentrer au niveau du centre de rotation C.

En première approximation, et pour une vitesse de rotation uniforme, la quantité d'ondes reçue par unité de temps est inversement proportionnelle à la distance au centre de rotation C, dans le plan de rotation.

Le fait de pouvoir changer de plan de rotation permet de réduire encore la quantité d'ondes reçue par les zones périphériques au cours du temps.

Chaque ligne d'action est repérée à l'aide de deux angles (Q,Z). Z indique l'angle entre le plan de rotation PR et le plan horizontal. Q indique l'angle entre la ligne d'action dans le plan de rotation, et l'axe A. La loi de pilotage Q(t) peut être une rotation à vitesse constante w.t, un mouvement pendulaire, ou un mouvement quelconque.

Un dispositif permet en outre le déplacement relatif du corps traité par rapport au centre de rotation C, soit par déplacement du corps B, soit par déplacement de l'appareil. Les paramètres de commande du dispositif d'intervention sont donc la vitesse de rotation w, l'angle du plan de rotation Z (éventuellement, un autre angle), et les trois positions relatives (x,y,z) du corps par rapport au centre de rotation, plus éventuellement trois coordonnées de direction du corps.

Certains appareils de traitement font le positionnement par un dispositif de stéréotaxie, qui permet de déterminer la position relative du point cible par rapport au corps traité, et donc d'amener le point cible au centre de rotation de l'appareil en agissant sur les commandes (x,y,z), éventuellement sur les commandes d'angle. La mémoire de l'appareil contient la description des surfaces caractéristiques du corps traité, obtenue par exemple par le procédé de tomographie géométrique. La mémoire de l'appareil contient également les données des surfaces définissant les zones du corps à protéger.

Un tel dispositif de stéréotaxie est décrit dans la publication: - "LA RADIO-CHIRURGIE A L'HOPITAL TENON (1986-1989) - EVOLUTION METHODOLOGIQUE VERS LA DOSIMETRIE 3-D EN VUE DE L'OPTIMISATION DES IRRADIATIONS INTRA-CRANIENNES EN CONDITIONS STEREOTAXIQUES", Dimitri LEFKOPOULOS, Paris, Assistance Publique, Juin 1989.

L'espace des projections va être constitué de trois dimensions "U,Q,Z" dont chaque point correspond à une droite de l'espace réel. Les dimensions angulaires "Q,Z" correspondent aux angles Q et Z déjà cités.

La dimension supplémentaire U (figure 22) permet de représenter des droites orientées passant par deux points P1 et P2 du support circulaire, mais ne passant pas forcément par le centre de rotation C de la façon suivante: l'angle Q représente la direction (P1,C). Le point P'2 est le point du support circulaire symétrique de P1 par rapport à C. La distance U est l'abscisse curviligne (le long du support circulaire) de P2, comptée à partir du point P'2. Le couple (U, Q) définit donc de manière unique une droite orientée coupant le support circulaire en deux points.

L'unité de calcul est programmée de façon à transformer les surfaces de l'espace réel en surfaces de l'espace des projections (U,Q,Z). Un volume dans l'espace réel se transforme en volume dans l'espace des projections. L'intersection d'un volume dans l'espace des projections avec le plan U=0 permet de calculer des zones du plan (Q,Z) correspondant à ces volumes.

En particulier, les zones protégées apparaissent dans le plan (Q,Z) comme des éléments de surfaces. Une ligne d'action d'un faisceau actif correspond à un point appartenant au plan (Q,Z), appelé point dual associé au faisceau actif, dont la position évolue au cours du temps en fonction de la loi de pilotage.

L'unité de calcul permet d'établir une loi de pilotage (Z=g(t), Q=f(t)) de chaque faisceau actif de façon à éviter au maximum de passer sur les éléments de surfaces correspondant aux zones protégées.

Au cas où la loi de pilotage générée ne peut éviter le passage par des zones protégées, par exemple dans le cas d'une loi de pilotage fixée une fois pour toutes, l'unité de calcul permet d'établir les instants où chaque faisceau actif doit être activé ou désactivé, en vérifiant simplement si le point dual associé au faisceau actif est à l'intérieur ou non d'une zone protégée.

Un moyen de réaliser ce test est de calculer une fois pour toutes une image digitale correspondant au rectangle du plan (Q,Z) limité aux valeurs comprises entre 0 et 2P.

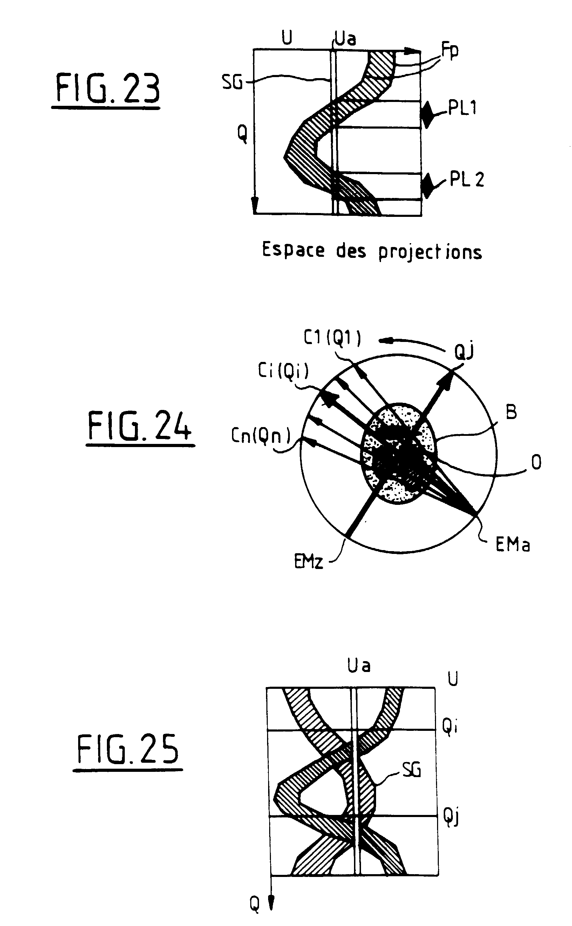

La figure 23 concerne le cas simplifié où l'on ne fait pas varier l'angle Z. L'image des projections n'a plus que deux dimensions U et Q. Les deux contours Fp délimitent, dans l'espace des projections, la zone ou objet à protéger dans le corps B.

Si Ua désigne la valeur du paramètre U associée au faisceau actif, le voisinage de U = Ua sur la figure 23 désigne

EP 0 536 357 B1

la zone d'activité du faisceau, dans l'espace des projections. Ce voisinage SG est délimité par deux verticales parallèles.

La zone délimitée par les deux contours critiques Fp (associés aux surfaces caractéristiques du corps traité) intersecte ledit voisinage SG en deux plages PL1, PL2 qui déterminent les instants auxquels le faisceau d'onde actif doit être désactivé, de manière à ne pas pénétrer dans les zones protégées du corps.

Le procédé d'intervention, qui fait également partie de cette invention, consiste donc à déterminer la trajectoire d'un faisceau actif de manière à éviter que ce faisceau ne pénètre à l'intérieur de zones interdites de l'espace, Ce procédé se caractérise par le fait qu'il utilise une représentation du corps traité et des zones protégées dans un espace appelé "espace des projections", où chaque point représente une droite de l'espace réel, et dans lequel l'ensemble des lignes d'actions que peut couvrir le faisceau actif peut être représenté.

Un exemple de réalisation de ce procédé consiste à déterminer pour chaque surface caractéristique du corps de l'espace réel, une ligne ou une surface critique dans l'espace des projections, formé par le lieu des droites tangentes à la surface critique.

Dans le cas de surfaces caractéristiques fermées enveloppant un volume, la surface critique associée est orientée de manière à définir un intérieur et un extérieur. A une ligne d'action correspond un point de l'espace des projections appelé point dual associé au faisceau actif.

Le procédé d'intervention consiste à déterminer des chemins dans l'espace des projections pour lequel le point dual associé au faisceau actif est toujours situé à l'extérieur de toutes les surfaces critiques définissant les zones protégées.

Dans le cas où la loi de pilotage est telle qu'il n'est pas possible d'éviter une zone protégée, le procédé d'intervention établit l'instant où le faisceau actif doit être désactivé et réactivé.

Dans le cas où le faisceau n'est pas assimilable à une droite, mais à un faisceau de droites de divergence connue, le faisceau est représenté sous la forme d'un disque dans l'espace des projections appelé "tache duale associée au faisceau actif" si celui-ci est de dimension deux. La trajectoire de la tache duale définie un ruban dans l'espace des projections, qui correspond à une bande verticale quand le point cible est situé au centre de rotation de l'appareil (figure 23). La tache duale peut être approximée par une "hyper-sphère" dans le cas général.

Une façon de réaliser ce procédé d'intervention consiste à calculer une image numérique appelée "image des projections synthétique", ayant les mêmes dimensions que l'espace des projections, et où chaque case contient des informations relatives à l'ensemble des points du corps intersectés par la droite correspondant au point considéré de l'espace des projections.

Un exemple consiste à créer une image numérique où chaque case indique par une valeur binaire si la droite de l'espace réel correspondante intersecte ou non une zone protégée.

Un autre exemple consiste à associer une valeur à chaque case de cette image des projections synthétique, valeur qui, si elle est strictement positive, est décrémentée à chaque fois que la tache duale passe par cette case, et qui, si elle est négative ou nulle, indique que le faisceau actif doit être désactivé. Cette valeur représente en quelque sorte un "crédit de radiation" qui diminue à chaque fois que le faisceau actif prend une direction très proche de la direction correspondant à cette case de l'image des projections synthétique.

Une autre manière de réaliser le procédé d'intervention concerne une façon différente d'obtenir les contours critiques dans l'espace des projections "E1" relatif à l'appareil d'intervention.

Elle se distingue de la réalisation précédente par le fait que l'on ne part pas des surfaces reconstruites correspondant au corps dans l'espace réel, mais directement de l'image des projections "I2" obtenue par un dispositif d'acquisition classique, et qui se situe donc dans un espace des projections "E2".

Comme le corps examiné a pu être déplacé entre le moment ou les données ont été acquises et le moment ou l'on fait l'intervention, ou comme encore les caractéristiques du dispositif d'acquisition et de l'appareil d'intervention peuvent varier fortement, il n'y a aucune raison pour que les deux espaces de projections E1 et E2 soient semblables. (Le procédé exposé précédemment n'était pas sujet à ce problème puisque l'on passait par l'intermédiaire de l'espace réel.).

Si par contre, on veut créer directement une image des projections "I1" dans l'espace des projections E1 à partir de l'image I2, il faut pour cela effectuer un rééchantillonnage de l'image I2 de l'espace E2 dans l'espace E1. Les techniques de rééchantillonnages sont des techniques connues de traitement d'image, qui se mettent en oeuvre à partir du moment où l'on connaît pour chaque point de l'espace d'arrivée E1, le point correspondant de l'espace de départ E2.

Comme chaque point de l'espace E1 correspond à une droite de l'espace réel, il suffit de regarder à quel point de l'espace E2 cette droite correspond. Cette méthode de transformation directe de l'image I2 est donc applicable pour tous les points de E1 pour lesquels la droite correspondante est représentée dans l'espace E2. Par exemple, dans le cas d'un appareil d'intervention uniquement mobile en rotation dans un plan de coupe donné, ce procédé est applicable à partir des données brutes acquises à partir d'un dispositif d'acquisition du type décrit dans la figure (1) ou (2). Les étapes de ce procédé sont alors :

(a) le rééchantillonnage de l'image des projections I2 de l'espace des projections E2 associé au dispositif de prise de vue en une image des projections I1 de l'espace des projections E1 associé à l'appareil d'intervention.

(b) La détection et le suivi des contours critiques dans l'image des projections I1.

(c) La sélection automatique, ou par un utilisateur, des zones protégées du corps. Par exemple, on transforme les contours critiques en surfaces caractéristiques dans l'espace usuel par le procédé de tomographie géométrique, et on présente les surfaces reconstruites à l'utilisateur qui les désigne.

(d) la détermination, en pré-traitement ou au cours de l'intervention, des intersections des contours critiques et de la tache duale associée au faisceau d'ondes actif.

Un autre but de cette invention est la définition d'un appareil et d'un procédé d'intervention permettant à la fois de suivre les déplacements des surfaces critiques et d'agir en un point précis, appelé "point cible" du corps traité au moyen de faisceaux d'ondes actifs passant tous par ce point cible.

L'appareil comporte les mêmes caractéristiques que l'appareil d'intervention décrit précédemment.

Il s'en distingue (figure 24) par le fait que le support en rotation autour du corps comporte, de part et d'autre du corps étudié:

- une source EMa de faisceaux d'ondes d'auscultation, et une série de capteurs Ci (angles Qi), placés le long du support circulaire à l'opposé de EMa;
- un (des) générateur(s) EMz de faisceau(x) actif(s), placé sur le support de manière à n'atteindre ni les capteurs, ni un autre générateur de faisceau. A chaque générateur est associé une ligne d'action de direction Qj.

Le centre O est le point-cible du corps B.

L'appareil comporte également une unité de calcul et une mémoire (non représentés sur la figure 24).

Dans ce cas, il y a concordance entre l'espace des projections E1 associé à l'appareil d'intervention, et l'espace des projections E2 associé au dispositif d'auscultation. Il y a donc un seul espace des projections "E" et une seule image des projections "I", qui est acquise par le dispositif d'auscultation de l'appareil d'intervention.

La figure 25 illustre ce qui se passe dans l'espace des projections. On suppose qu'il y a deux zones (hachurées différemment) à considérer. A l'angle Qi, l'appareil d'acquisition met à jour la définition de ces zones. De son côté, l'appareil d'intervention est associé à un paramètre Ua, autour duquel est défini un voisinage SG (tache duale associée au faisceau actif), comme précédemment. A l'instant considéré, il se trouve à l'angle Qj. Si la zone en hachures dense est à traiter, la faisceau d'intervention n'est activé que lorsque le voisinage du point Ua, Qi se trouve dans cette zone.

La détermination des contours critiques se fait ainsi en temps réel dans l'image des projections I, et chaque point du contour critique est remis à jour à chaque tour du dispositif d'acquisition, ce qui permet de suivre les mouvements du corps au cours de l'intervention.

La position relative de la ou des taches duales associées aux faisceaux actifs, par rapport aux contours critiques suivis dans l'image des projections, permet également de déterminer en temps réel des ordres d'activation ou de désactivation, des ordres de pilotage des faisceaux actifs, ou encore des ordres de recentrage du corps traité de façon à toujours maintenir le point cible au centre de focalisation des faisceaux actifs.

Cet appareil et ce procédé permettent donc d'intervenir en un point d'un corps mobile au cours du temps.

Une autre grande variante de l'invention sera maintenant décrite en référence à la figure 26, et à l'annexe de formules ajoutée en fin de description.

Cette variante engendre, directement dans l'espace réel, une "image de gradients" d'une coupe du corps considéré. Elle se caractérise par le fait que les contours sont renforcés dans l'image des projections, comme précédemment, tandis qu'une rétroprojection est effectuée ensuite pour passer dans l'espace réel, où l'on peut effectuer le suivi de contours.

Il est fait référence à l'ouvrage de EKSTROM déjà cité, chapitre 4, "IMAGE RECONSTRUCTION FROM PROJECTIONS", contribution de A.C.KAK.

A titre d'exemple, les formules données correspondent au cas du scanner de troisième génération à faisceau parallèle (figure 2).

Le point de départ (étape 260, figure 26) est la constitution de l'image des projections, maintenant notée IP1[Q, U]. (Pour alléger les notations, on utilise les crochets pour les variables dont dépend une fonction).

Le coefficient d'absorption des ondes d'auscultation en un point (x,y) de l'espace réel, noté ABS(x,y), est donné par la formule (I), où:

- IP2[Q,U], donnée par la formule (II), est une autre image dans l'espace des projections, obtenue par convolution de IP1, par une fonction de filtrage hl[b], b correspondant au paramètre "de ligne" U. C'est à dire que la convolution s'effectue pour toutes les lignes (tous les U) de IP1, à Q constant;

et

- h1[b] peut être donnée par exemple par la formule (III), où les bornes d'intégration +/- W (majuscule) valent 1/2.u, tandis que u est l'espacement entre deux capteurs voisins sur la ligne U.

Aux notations près, ces trois formules sont semblables aux formules (6), (7) et (8) données page 120 de la contribution précitée de KAK.

L'invention utilise la composante selon la coordonnée U du gradient de l'image IP2, notée IP3, et définie par la formule (IV).

A partir des produits de IP3 par cos Q et sin Q, notés respectivement IP3x et IP3y, comme montré par les formules (V) et (VI), le Demandeur a observé que l'on peut déterminer les composantes du gradient en x et en y de l'image dans l'espace réel. Ces composantes, notées Grx et Gry, sont obtenues par les formules (VII) et (VIII), qui représentent une rétroprojection des images IP3x et IP3y.

Le Demandeur a en outre observé qu'il est possible de calculer l'image IP3 directement à partir de l'image IP1. A cet effet:

- on définit la fonction de filtrage k1[b], qui est la dérivée de h1[b] par rapport à sa variable unique notée b, comme le précise la formule (IX);

- l'image IP3[Q,U] est alors calculée à partir de la formule (X), qui représente la convolution de IP1, par cette fonction de filtrage k1[b], b correspondant au paramètre "de ligne" U;

- mais en notant b= n.u, où n est un entier relatif compris entre -N/2 et +N/2, N étant le nombre de capteurs, le Demandeur a observé que l'on peut exprimer k1[n.u] sous forme discrète, conformément à la formule (XI).

Cette formule "discrète" de k1 peut également s'écrire selon les relations (XII), d'une remarquable simplicité, et susceptibles d'être calculées à l'avance, donc tabulées en mémoire par exemple.

Il est donc possible de calculer IP3 d'une manière très simple et rapide, et de plus en ne traitant qu'une ligne à la fois de IP1, à Q constant, comme elle arrive du dispositif d'acquisition.

Deux autres remarques sont à faire:

- cette technique est un renforcement de contours de l'image IP1 en l'image IP3 (en l'espèce, celui auquel il a été fait référence plus haut);

- k1 étant une dérivée, ce renforcement de contours se fonde sur un traitement "différentiel" des mesures. Comme également décrit plus haut, on pourrait faire ce traitement au niveau des capteurs.

Après l'étape 260 déjà citée, on va donc:

- calculer l'image des projections aux contours renforcés IP3, à l'étape 262, comme il vient d'être dit,

- en déduire à l'étape 264 les images auxiliaires IP3x et IP3y, ce qui peut se faire également au fur et à mesure de l'arrivée des lignes,

- calculer à l'étape 266 les images de composantes en x et en y de gradient dans l'espace réel, conformément aux formules (VII) et (VIII), ce traitement étant global en Q, qui varie de 0 à pi pour toutes les lignes, et

- en déduire une image de modules du vecteur gradient dans l'espace réel, IR[x,y], défini classiquement par la formule (XIII).

En d'autres termes, ce procédé de rétroprojection filtrée permet de passer de l'image des projections, où Q est l'angle d'incidence des rayons et U la coordonnée du détecteur le long de la ligne de détecteur, à une image numérique de gradients dans l'espace réel.

IR[x,y] est une image de contour qui peut être utilisée pour donner une première approximation pour la tomographie géométrique réciproque.

On peut aussi effectuer directement le suivi de contours sur cette image IR[x,y], en recourant éventuellement aux composantes du gradient Grx et Gry précédemment obtenues, pour obtenir les surfaces caractéristiques ou "frontières" du corps examiné.

Par ailleurs, seule l'opération 266 est grosse consommatrice de calculs. Dans toutes les applications, comme le pilotage d'appareils d'intervention, où l'on ne s'intéresse qu'à certains points précis de l'espace réel, il suffit de limiter le calcul (la rétroprojection) selon les formules (VII) et (VIII) à ces seuls points.

ANNEXE FORMULES

$$(\text{I}) \quad \text{ABS}[x,y] = \int_{0}^{pi} \text{IP2}[Q, x.\cos Q + y.\sin Q] \ . \ dQ$$

$$(\text{II}) \quad \text{IP2}[Q,U] = \int_{-\infty}^{+\infty} \text{IP1}[Q, a] \ . \ h1 \ [U-a]. \ da$$

$$(\text{III}) \quad h1[b] = \int_{-W}^{W} |w| \ . \ \exp [j.2.pi.w.b] \ . \ dw$$

$$(\text{IV}) \quad \text{IP3}[Q,U] = d/dU( \ \text{IP2}[Q,U] \ )$$

$$(\text{V}) \quad \text{IP3x}[Q,U] = \text{IP3}[Q,U] \ . \ \cos Q$$

$$(\text{VI}) \quad \text{IP3y}[Q,U] = \text{IP3}[Q,U] \ . \ \sin Q$$

$$(\text{VII}) \quad \text{Grx}[x,y] = \int_{0}^{pi} \text{IP3x}[Q, x.\cos Q + y.\sin Q] \ . \ dQ$$

$$(\text{VIII}) \quad \text{Gry}[x,y] = \int_{0}^{pi} \text{IP3y}[Q, x.\cos Q + y.\sin Q] \ . \ dQ$$

$$(\text{IX}) \quad k1[b] = d/db( \ h1[b] \ )$$

$$(\text{X}) \quad \text{IP3}[Q,U] = \int_{-\infty}^{+\infty} \text{IP1}[Q,c] \ . \ k1[U-c] \ . \ dc$$

$$(\text{XI}): \quad k1[n.u] = [1/(pi^2.n^3.u^3)].[(pi^2.n^2/2-1)\cos(pi.n) - pi.n.\sin(pi.n) + 1]$$

$$(\text{XII}) \quad k1[n.u] = 0 \qquad \text{si } n = 0$$

$$k1[n.u] = 1/(2.n.u^3) \qquad \text{si n pair} \# 0$$

$$k1[n.u] = 1/(2.u^3) [(4-pi^2.n^2)/(pi^2.n^3)] \qquad \text{si n impair}$$

$$(XIII) \qquad IR[x,y] = ( Grx^2[x,y] + Gry^2[x,y] )^{1/2}$$

**Revendications**

1. Dispositif d'aide à l'inspection d'un corps, du type comprenant:

   - des moyens (20) pour acquérir un ensemble rangé de signaux de données brutes, dont chacun représente l'intensité d'un faisceau d'ondes de type donné, qui sort du corps le long d'un axe dit "ligne d'acquisition", lequel axe est désigné par au moins deux paramètres, tandis que les données brutes définissent, en fonction de ces paramètres d'axe, une "image des projections" du rayonnement dans un "espace des projections", qui est un espace multi-dimensionnel, dual de l'espace réel, chaque point de l'espace des projections représentant une droite de l'espace réel, et
   - des moyens (22) de traitement de ces signaux de données brutes,

   caractérisé en ce que les moyens de traitement (22) comprennent des moyens d'analyse différentielle des signaux de données brutes relativement à leurs paramètres d'axe, pour y déterminer des points critiques, où se manifeste un saut d'intensité du signal capté, de sorte que chacun de ces points correspond à une ligne d'acquisition tangente à une frontière interne ou externe du corps examiné, tandis que les paramètres d'axe des points critiques représentent dans leur ensemble la position d'une partie au moins desdites frontières du corps.

2. Dispositif selon la revendication 1, caractérisé en ce qu'il comprend en outre:

   - un emplacement pour recevoir un corps (B) à examiner, et
   - un ensemble de capteurs (Ci) dont chacun est sensible à un faisceau d'ondes sortant du corps selon un trajet ou "ligne d'acquisition" qui lui est propre, cet ensemble de capteurs fournissant les données brutes.

3. Dispositif selon la revendication 2, caractérisé en ce que les capteurs (Ci) sont disposés en agencement unidimensionnel, les paramètres d'axe comprenant une coordonnée de position et au moins une coordonnée de direction.

4. Dispositif selon la revendication 2, caractérisé en ce que les capteurs (Ci) sont disposés en agencement bidimensionnel, les paramètres d'axe comprenant au moins deux coordonnées de position et au moins une coordonnée de direction.

5. Dispositif selon l'une des revendications 3 et 4, caractérisé en ce que l'ensemble de capteurs (Ci) est mobile par rapport au corps, ce qui permet une variation, en fonction du temps, de l'un au moins des paramètres d'axe.

6. Dispositif selon l'une des revendications précédentes, caractérisé en ce que les moyens d'analyse différentielle comportent:

   - des moyens de scrutation pour déterminer l'ensemble des points critiques de l'image des projections où se manifeste un saut d'intensité du signal capté, et
   - des moyens de traitement d'image, pour déterminer ensuite des contours critiques, formés chacun d'une succession continue de points critiques.

7. Dispositif selon l'une des revendications précédentes, caractérisé en ce que les signaux de données brutes sont exprimés sous forme différentielle.

8. Dispositif selon l'une des revendications précédentes, caractérisé en ce qu'il lui est associé un appareil d'intervention sur le corps, commandé à partir des paramètres d'axe des points critiques.

**9.** Dispositif selon l'une des revendications précédentes, caractérisé en ce que les moyens de traitement comportent en outre des moyens de conversion pour déterminer des signaux reconstruits, qui représentent, dans l'espace réel, la position d'une partie au moins desdites frontières.

**10.** Procédé de traitement de signaux relatifs à l'inspection d'un corps à l'aide de faisceaux d'ondes qui en sortent, du type dans lequel:

- on acquiert un ensemble rangé de signaux de données brutes, dont chacun représente l'intensité du faisceau d'ondes qui sort du corps le long d'un axe dit "ligne d'acquisition", lequel axe est désigné par au moins deux paramètres, tandis que les données brutes définissent, en fonction de ces paramètres d'axe, une "image des projections" du rayonnement dans un "espace des projections", qui est un espace multi-dimensionnel, dual de l'espace réel, chaque point de l'espace des projections représentant une droite de l'espace réel, et
- on traite ces signaux de données brutes, pour obtenir des informations spatiales sur ledit corps,

caractérisé en ce que le traitement comprend une analyse différentielle des signaux de données brutes, pour y déterminer des points critiques, où se manifeste un saut d'intensité du signal capté, de sorte que chacun de ces points correspond à une ligne d'acquisition tangente à une frontière interne ou externe du corps examiné, tandis que les paramètres d'axe des points critiques représentent dans leur ensemble la position d'une partie au moins desdites frontières du corps.

**11.** Procédé selon la revendication 10, caractérisé en ce que l'analyse différentielle comporte:

- une scrutation pour déterminer l'ensemble des points critiques de l'image des projections où se manifeste un saut d'intensité du signal capté, et
- un traitement d'image, pour déterminer ensuite des contours critiques, formés chacun d'une succession continue de points critiques.

**12.** Procédé selon l'une des revendications 10 et 11, caractérisé en ce que les signaux de données brutes sont exprimés sous forme différentielle.

**13.** Procédé selon l'une des revendications 10 à 12, caractérisé en ce qu'il comprend en outre l'opération consistant à commander un positionnement à partir des paramètres d'axe des points critiques.

**14.** Procédé selon l'une des revendications 10 à 13, caractérisé en ce qu'il comprend en outre une opération de conversion des paramètres d'axe des points critiques en signaux reconstruits représentant, dans l'espace réel, la position d'une partie au moins desdites frontières.

**15.** Procédé selon la revendication 14, caractérisé en ce que ladite conversion comprend une rétroprojection pondérée des points critiques dans l'espace réel, et un suivi de contours dans cet espace réel, lequel fournit lesdites frontières.

**16.** Procédé selon la revendication 14, caractérisé en ce que ladite conversion comprend une transformation géométrique locale.

**17.** Procédé selon la revendication 14, caractérisé en ce que ladite conversion comprend une transformation géométrique globale.

**18.** Procédé selon la revendication 14, caractérisé en ce que ladite conversion comprend une transformation algorithmique, opérant par:

- sélection de toutes les droites correspondant à des points d'un même contour critique,
- sélection de celles de ces droites qui appartiennent à un même plan courant,
- association à chacune de ces droites du demi-plan qu'elle délimite dans le plan courant, du côté défini par le gradient, et
- construction progressive de l'intersection de ces demi-plans, sous réserve d'obtenir une frontière localement convexe.

**19.** Procédé selon la revendication 11, dans lequel on dispose d'une estimation des frontières internes et externe du corps dans l'espace réel, caractérisé en ce que ladite conversion comprend:

- la conversion de ces frontières estimées de l'espace réel en contours critiques estimés dans l'espace dual,
- la comparaison des contours critiques estimés aux contours critiques observés, ce qui fournit des informations de rectification,
- la conversion de ces informations de rectification, de l'espace dual dans l'espace réel, et
- la mise à jour de ladite estimation des frontières, ces opérations étant répétées jusqu'à atteindre un degré choisi de concordance entre les contours critiques estimés et les contours critiques observés, ce qui fournit les frontières reconstruites.

20. Procédé selon la revendication 19, caractérisé en ce que les informations de rectification sont des corrections aux contours critiques estimés, que l'on convertit de l'espace dual dans l'espace réel, et à partir desquelles on met à jour ladite estimation des frontières.

21. Procédé selon la revendication 19, caractérisé en ce que les informations de rectification sont des contours critiques estimés corrigés, que l'on convertit de l'espace dual dans l'espace réel, et à partir desquels on met à jour ladite estimation des frontières.

22. Procédé selon l'une des revendications 19 à 21, appliqué au suivi dynamique du corps, chaque estimation initiale des frontières étant définie à partir d'au moins une frontière reconstruite antérieurement.

23. Procédé selon la revendication 10, caractérisé en ce que la scrutation comprend le calcul d'une image des projections aux contours renforcés (IP3), et en ce que le traitement d'image comprend la rétroprojection de composantes (IP3x, IP3y) de cette image en images de composantes de gradient (Grx, Gry) dans l'espace réel, ce qui permet la synthèse d'une image de gradient dans l'espace réel (IR[x,y]).

## Patentansprüche

1. Hilfsvorrichtung zur Untersuchung eines Körpers, des Typs, der enthält:

- Mittel (20) zum Erfassen einer geordneten Gesamtheit von Rohdatensignalen, wovon jedes die Intensität eines Wellenstrahls gegebenen Typs repräsentiert, der den Körper längs einer Achse, die "Erfassungslinie" genannt wird, verläßt, wobei die Achse durch wenigstens zwei Parameter bezeichnet ist, während die Rohdaten in Abhängigkeit von diesen Achsparametern in einem "Projektionsraum", der ein zum wirklichen Raum dualer mehrdimensionaler Raum ist, ein "Projektionsbild" der Strahlung definieren, wobei jeder Punkt des Projektionsraums eine Gerade des wirklichen Raums repräsentiert, und
- Mittel (22) zur Verarbeitung dieser Rohdatensignale,

dadurch gekennzeichnet, daß die Verarbeitungsmittel (22) Mittel zur differentiellen Analyse der Rohdatensignale relativ zu ihren Achsparametern enthalten, um daraus kritische Punkte zu bestimmen, bei denen ein Intensitätssprung des aufgenommenen Signals auftritt, so daß jeder dieser Punkte einer Erfassungslinie entspricht, die zu einer internen oder externen Grenze des untersuchten Körpers tangential ist, während die Achsparameter der kritischen Punkte insgesamt die Position wenigstens eines Teils der Grenzen des Körpers repräsentieren.

2. Vorrichtung nach Anspruch 1, dadurch gekennzeichnet, daß sie außerdem enthält:

- einen Platz, um einen zu untersuchenden Körper (B) aufzunehmen, und
- eine Gesamtheit von Sensoren (Ci), wovon jeder auf einen Wellenstrahl anspricht, der den Körper auf einer Bahn oder "Erfassungslinie", die dem Sensor zugeordnet ist, verläßt, wobei diese Gesamtheit von Sensoren die Rohdaten liefert.

3. Vorrichtung nach Anspruch 2, dadurch gekennzeichnet, daß die Sensoren (Ci) eindimensional angeordnet sind, wobei die Achsparameter eine Positionskoordinate und wenigstens eine Richtungskoordinate umfassen.

4. Vorrichtung nach Anspruch 2, dadurch gekennzeichnet, daß die Sensoren (Ci) zweidimensional angeordnet sind, wobei die Achsparameter wenigstens zwei Positionskoordinaten und wenigstens eine Richtungskoordinate umfassen.

**5.** Vorrichtung nach einem der Ansprüche 3 und 4, dadurch gekennzeichnet, daß die Gesamtheit von Sensoren (Ci) in bezug auf den Körper beweglich ist, wodurch eine zeitabhängige Änderung wenigstens eines der Achsparameter ermöglicht wird.

**6.** Vorrichtung nach irgendeinem der vorangehenden Ansprüche, dadurch gekennzeichnet, daß die Mittel zur differentiellen Analyse enthalten:

- Abfragemittel zur Bestimmung der Gesamtheit der kritischen Punkte des Projektionsbildes, bei denen ein Intensitätssprung des aufgenommenen Signals auftritt, und
- Bildverarbeitungsmittel zur anschließenden Bestimmung kritischer Konturen, die jeweils aus einer ununterbrochenen Folge kritischer Punkte gebildet sind.

**7.** Vorrichtung nach irgendeinem der vorangehenden Ansprüche, dadurch gekennzeichnet, daß die Rohdatensignale in differentieller Form ausgedrückt werden.

**8.** Vorrichtung nach irgendeinem der vorangehenden Ansprüche, dadurch gekennzeichnet, daß ihr ein Gerät für den Eingriff in den Körper zugeordnet ist, das anhand der Achsparameter der kritischen Punkte gesteuert wird.

**9.** Vorrichtung nach irgendeinem der vorangehenden Ansprüche, dadurch gekennzeichnet, daß die Verarbeitungsmittel außerdem Umsetzungsmittel enthalten, um rekonstruierte Signale zu bestimmen, die im wirklichen Raum die Position wenigstens eines Teils der Grenzen repräsentieren.

**10.** Verfahren zur Verarbeitung von Signalen, die auf die Untersuchung eines Körpers mit Hilfe von diesen verlassenden Wellenstrahlen bezogen sind, des Typs, bei dem:

- eine geordnete Gesamtheit von Rohdatensignalen erfaßt wird, wovon jedes die Intensität des Wellenstrahls repräsentiert, der den Körper längs einer Achse, die "Erfassungslinie" genannt wird, verläßt, wobei die Achse durch wenigstens zwei Parameter bezeichnet ist, während die Rohdaten in Abhängigkeit von diesen Achsparametern in einem "Projektionsraum", der ein zum wirklichen Raum dualer mehrdimensionaler Raum ist, ein "Projektionsbild" der Strahlung definieren, wobei jeder Punkt des Projektionsraums eine Gerade im wirklichen Raum repräsentiert, und
- diese Rohdatensignale verarbeitet werden, um räumliche Informationen bezüglich des Körpers zu erhalten,

dadurch gekennzeichnet, daß die Verarbeitung eine differentielle Analyse der Rohdatensignale umfaßt, um daraus kritische Punkte zu bestimmen, bei denen ein Intensitätssprung des empfangenen Signals auftritt, so daß jeder dieser Punkte einer Erfassungslinie entspricht, die zu einer internen oder externen Grenze des untersuchten Körpers tangential ist, während die Achsparameter der kritischen Punkte insgesamt die Position wenigstens eines Teils der Grenzen des Körpers repräsentieren.

**11.** Verfahren nach Anspruch 10, dadurch gekennzeichnet, daß die differentielle Analyse umfaßt:

- eine Abfrage, um die Gesamtheit der kritischen Punkte des Projektionsbildes, bei denen ein Intensitätssprung des aufgenommenen Signals auftritt, zu bestimmen, und
- eine Bildverarbeitung, um anschließend kritische Konturen zu bestimmen, die jeweils aus einer ununterbrochenen Folge von kritischen Punkten gebildet sind.

**12.** Verfahren nach einem der Ansprüche 10 und 11, dadurch gekennzeichnet, daß die Rohdatensignale in differentieller Form ausgedrückt werden.

**13.** Verfahren nach einem der Ansprüche 10 bis 12, dadurch gekennzeichnet, daß es außerdem die Operation enthält, die darin besteht, eine Positionierung anhand der Achsparameter der kritischen Punkte zu steuern.

**14.** Verfahren nach irgendeinem der Ansprüche 10 bis 13, dadurch gekennzeichnet, daß es außerdem eine Operation zur Umsetzung der Achsparameter der kritischen Punkte in rekonstruierte Signale, die im wirklichen Raum die Position wenigstens eines Teils der Grenzen repräsentieren, enthält.

**15.** Verfahren nach Anspruch 14, dadurch gekennzeichnet, daß die Umsetzung eine gewichtete Rückprojektion der kritischen Punkte in den wirklichen Raum und eine Verfolgung der Konturen in diesem wirklichen Raum, die die Grenzen liefert, enthält.

16. Verfahren nach Anspruch 14, dadurch gekennzeichnet, daß die Umsetzung eine lokale geometrische Transformation enthält.

17. Verfahren nach Anspruch 14, dadurch gekennzeichnet, daß die Umsetzung eine globale geometrische Transformation enthält.

18. Verfahren nach Anspruch 14, dadurch gekennzeichnet, daß die Umsetzung eine algorithmische Transformation enthält, die durch

- die Wahl sämtlicher Geraden, die den Punkten derselben kritischen Kontur entsprechen,
- die Wahl derjenigen dieser Geraden, die zur selben aktuellen Ebene gehören,
- das Zuordnen der Halbebene, die von einer dieser Geraden in der aktuellen Ebene begrenzt wird und auf der durch den Gradienten definierten Seite liegt, an diese Gerade, für jede dieser Geraden, und
- die progressive Konstruktion der Schnittlinien dieser Halbebenen unter der Bedingung, daß eine lokal konvexe Grenze erhalten wird,

ausgeführt wird.

19. Verfahren nach Anspruch 11, bei dem eine Schätzung der internen und externen Grenzen des Körpers im wirklichen Raum ausgeführt wird, dadurch gekennzeichnet, daß die Umsetzung enthält:

- die Umsetzung dieser geschätzten Grenzen im wirklichen Raum in geschätzte kritische Konturen im dualen Raum,
- den Vergleich der geschätzten kritischen Konturen mit den beobachteten kritischen Konturen, wodurch Berichtigungsinformationen geliefert werden,
- die Umsetzung dieser Berichtigungsinformationen aus dem dualen Raum in den wirklichen Raum und
- die Aktualisierung der Schätzung der Grenzen, wobei diese Operationen wiederholt werden, bis ein gewählter Übereinstimmungsgrad zwischen den geschätzten kritischen Konturen und den beobachten kritischen Konturen erreicht ist, wodurch die rekonstruierten Grenzen geliefert werden.

20. Verfahren nach Anspruch 19, dadurch gekennzeichnet, daß die Berichtigungsinformationen Korrekturen an den geschätzten kritischen Konturen sind, die aus dem dualen Raum in den wirklichen Raum umgesetzt werden und anhand derer die Schätzung der Grenzen aktualisiert wird.

21. Verfahren nach Anspruch 19, dadurch gekennzeichnet, daß die Berichtigungsinformationen korrigierte geschätzte kritische Konturen sind, die aus dem dualen Raum in den wirklichen Raum umgesetzt werden und anhand derer die Schätzung der Grenzen aktualisiert wird.

22. Verfahren nach irgendeinem der Ansprüche 19 bis 21, das auf die dynamische Verfolgung des Körpers angewendet wird, wobei jede Anfangsschätzung der Grenzen anhand wenigstens einer früher rekonstruierten Grenze definiert wird.

23. Verfahren nach Anspruch 10, dadurch gekennzeichnet, daß die Abfrage die Berechnung eines Projektionsbildes auf die verstärkten Konturen (IP3) enthält und daß die Bildverarbeitung die Rückprojektion von Komponenten (IP3x, IP3y) dieses Bildes in Bilder von Gradientenkomponenten (Grx, Gry) im wirklichen Raum enthält, wodurch die Synthese eines Gradientenbildes im wirklichen Raum (IR[x,y]) ermöglicht wird.

## Claims

1. Device for aiding the inspection of a body, of the type comprising:

- means (20) for acquiring a ranked set of raw data signals, each of which represents the intensity of a wave beam of given type, which exits from the body along an axis termed the "acquisition line", which axis is designated by at least two parameters, while the raw data define, as a function of these axis parameters, a "projection image" of the radiation in a "projection space" which is a multi-dimensional space the dual of real space, each point of the projection space representing a straight line in real space, and
- means (22) for processing these raw data signals, characterized in that the processing means (22) comprise means of differential analysis of the raw data signals in relation to their axis parameters so as to determine therein critical points manifesting a jump in the intensity of the signal captured, so that each of these points corresponds to an acquisition line tangential to an internal or external boundary of the body examined, while the axis parameters of the critical points represent as a whole the position of one part at least of the said boundaries of the body.

2. Device according to Claim 1, characterized in that it furthermore comprises:

- a location for receiving a body (B) to be examined, and
- a set of sensors (Ci) each of which is responsive to a wave beam exiting from the body along a path or "acquisition line" which is specific thereto, this set of sensors yielding the raw data.

3. Device according to Claim 2, characterized in that the sensors (Ci) are arranged in a one-dimensional layout, the axis parameters comprising a position ccordinate and at least one direction coordinate.

4. Device according to Claim 2, characterized in that the sensors (Ci) are arranged in a two-dimensional layout, the axis parameters comprising at least two position coordinates and at least one direction coordinate.

5. Device according to one of Claims 3 and 4, characterized in that the set of sensors (Ci) can move with respect to the body, this allowing a variation, as a function of time, in one at least of the axis parameters.

6. Device according to one of the preceding claims, characterized in that the means of differential analysis comprise:

- scrutinizing means for determining the set of critical points of the projection image manifesting a jump in the intensity of the signal captured, and
- image processing means for subsequently determining critical contours each formed of a continuous succession of critical points.

7. Device according to one of the preceding claims, characterized in that the raw data signals are expressed in differential form.

8. Device according to one of the preceding claims, characterized in that there is associated therewith an apparatus for intervening on the body, controlled on the basis of the axis parameters of the critical points.

9. Device according to one of the preceding claims, characterized in that the processing means furthermore include conversion means for determining reconstructed signals which represent, in real space, the position of one part at least of the said boundaries.

10. Method of processing signals relating to the inspection of a body with the aid of wave beams exiting therefrom, of the type in which:

- a ranked set of raw data signals is acquired, each of which represents the intensity of the wave beam which exits from the body along an axis termed the "acquisition line", which axis is designated by at least two parameters, while the raw data define, as a function of these axis parameters, a "projection image" of the radiation in a "projection space" which is a multi-dimensional space the dual of real space, each point of the projection space representing a straight line in real space, and
- these raw data signals are processed to obtain spatial information about the said body,

characterized in that the processing comprises a differential analysis of the raw data signals so as to determine therein critical points manifesting a jump in the intensity of the signal captured, so that each of these points corresponds to an acquisition line tangential to an internal or external boundary of the body examined, while the axis parameters of the critical points represent as a whole the position of one part at least of the said boundaries of the body.

11. Method according to Claim 10, characterized in that the differential analysis comprises:

- a scrutinizing so as to determine the set of critical points of the projection image manifesting a jump in the intensity of the signal captured, and
- an image processing so as to subsequently determine critical contours each formed of a continuous succession of critical points.

12. Method according to one of Claims 10 and 11, characterized in that the raw data signals are expressed in differential form.

13. Method according to one of Claims 10 to 12, characterized in that it furthermore comprises the operation consisting in instructing a positioning on the basis of the axis parameters of the critical points.

14. Method according to one of Claims 10 to 13, characterized in that it furthermore comprises an operation of conversion of the axis parameters of the critical points into reconstructed signals representing, in real space, the position of one part at least of the said boundaries.

15. Method according to Claim 14, characterized in that the said conversion comprises a weighted retroprojection of the critical points in real space, and a contour tracking in this real space, which yields the said boundaries.

16. Method according to Claim 14, characterized in that the said conversion comprises a local geometric transformation.

17. Method according to Claim 14, characterized in that the said conversion comprises a global geometric transformation.

18. Method according to Claim 14, characterized in that the said conversion comprises an algorithmic transformation which operates by:

- selecting all the straight lines corresponding to points of the same critical contour,
- selecting those of these straight lines which belong to the same current plane,
- associating with each of these straight lines the half-plane delimited thereby in the current plane, on the side defined by the gradient, and
- progressively constructing the intersection of these half-planes, with the proviso that a locally convex boundary is obtained.

19. Method according to Claim 11, in which an estimate of the internal and external boundaries of the body in real space is employed, characterized in that the said conversion comprises:

- the conversion of these real space estimated boundaries into estimated critical contours in dual space,
- the comparison of the estimated critical contours with the observed critical contours, this yielding rectification information,
- the conversion of this rectification information from the dual space into real space, and
- the updating of the said estimate of the boundaries, these operations being repeated until a chosen degree of agreement is achieved between the estimated critical contours and the observed critical contours, this yielding the reconstructed boundaries.

20. Method according to Claim 19, characterized in that the rectification information is corrections to the estimated critical contours, which are converted from the dual space into real space, and on the basis of which the said estimate of the boundaries is updated.

21. Method according to Claim 19, characterized in that the rectification information is corrected estimated critical contours, which are converted from the dual space into real space, and on the basis of which the said estimate of the boundaries is updated.

22. Method according to one of Claims 19 to 21, applied to the dynamic tracking of the body, each initial estimate of the boundaries being defined on the basis of at least one previously reconstructed boundary.

23. Method according to Claim 10, characterized in that the scrutinizing comprises the computation of a projection image with enhanced contours (IP3), and in that the image processing comprises the retroprojection of components (IP3x, IP3y) of this image into images with gradient components (Grx, Gry) in real space, this allowing the synthesis of a gradient image in real space IR[x,y]).

# FIG.1

# FIG.2

# FIG.3

# FIG.4

Image des projections

Dispositif de prise
de vue

# FIG. 5

## FIG.6A

## FIG.6B

## FIG.7

## FIG.9

## FIG.8A

Espace des projections

## FIG.8B

Espace réel

## FIG.8C

Espace des projections

## FIG.8D

Espace réel

EP 0 536 357 B1

## FIG. 10

220 — TABLE DE DONNEES BRUTES

222 — CIRCUIT DE RENFORCEMENT DE CONTOURS

224 — CIRCUIT DE SUIVI DE CONTOURS

226 — CIRCUIT DE CONVERSION ESPACE DES PROJECTIONS → ESP. REEL

## FIG. 11

50 — SIGNAUX BRUTS

52 — CONSTITUTION D'UNE IMAGE DES PROJECTIONS

54 — RENFORCEMENT DES CONTOURS

56 — SUIVI DES CONTOURS

58 — CONTOURS DANS L'ESPACE DES PROJECT.

60 — TRANSFORMATION ESPACE DES PROJECTIONS → ESPACE REEL

62 — CONTOURS DANS L'ESPACE REEL

31

# FIG.12

P1 (l1)
P2 (l2)
P3 (l3)
P4 (l4)
P5 (l5)
G1
F
(U = f(Q))

U1
U
Q1
Q

DPex
DPin
l5
l4
l3
l2
l1
(G1)
S

Espace des projections

Espace réel

# FIG.16

Uk
U
F
(U=f(Q))
Qk
Pk
$\dfrac{df}{dQ}$
Q

Y
R:(x,y)
y
S
u
Q
x
X

Espace des projections

Espace réel

# FIG.13

130 — SELECTION DU PLAN DE COUPE

131 — Pk (Uk , Qk) $\longrightarrow$ Lk

133 — Pk $\longrightarrow$ $\overrightarrow{Gk}$ en Pk

134 — $\overrightarrow{Gk}$ $\longrightarrow$ DPin (Lk)

136 — INTERSECTION DPin (Lk)

AVEC DPin (Lk-1) .......... DPin (1)

137 — Pk épuisés ou CHANGEMENT CONCAVITE ?

NON

OUI

139 — FIN

140 — SELECTION D'UN MORCEAU DE SINUSOÏDE DANS F

142 — CONVERSION EN ARC DE CERCLE DANS L'ESPACE REEL

__FIG.14__

144 — AJOUT à S

146 — "F" épuisée ?  →  NON

OUI

148 — FIN

150 — POUR CHAQUE POINT P dans F

152 — P (U,Q) avec U = f (Q)

__FIG.15__

154 — PENTE df/dQ de f( ) en P

156 — CALCUL de R (x,y,Q)

158 — P SUIVANT ?  →  OUI

NON

160 — FIN

170 ▸ DANS L'ESPACE REEL
INITIALISER TABLE T(x,y) à ∅

172 ▸ POUR CHAQUE POINT "P"(U,Q) DE "F"
DANS L'ESPACE DES PROJECTIONS

174 ▸ CALCUL DE LA LIGNE D'ACQUISITION
L(U,Q) ; RELATION $ax + by + c = 0$

176 ▸ POUR TOUTE CASE T(x,y)
INTERSECTEE PAR "L"
FAIRE T(x,y) ⟶ T(x,y) + 1

177 ▸ "P"
SUIVANT
?

OUI

NON

178 ▸ SUIVI DE CONTOURS
DANS TABLE T(x,y)

179 ▸ CONTOUR DANS L'ESPACE REEL

<u>FIG.17</u>

FIG.18

FIG.19

ESPACE DES PROJECTIONS

ESPACE REEL

## FIG.20

Instant t-dt       Instant t

## FIG.21

## FIG.22

FIG.23

Espace des projections

FIG.24

FIG.25

# FIG.26

260 — CONSTITUTION DE L' IMAGE DES PROJECTIONS IP1(Q,U)

262 — CONSTRUCTION DE L'IMAGE IP3 [Q,U] PAR CONVOLUTION SELON U DE IP1[Q,U] PAR LE FILTRE k1

264 — CONSTRUCTION DES IMAGES IP3x[Q,U] ET IP3y[Q,U], A PARTIR DE IP3 [Q,U]

266 — CALCUL DES IMAGES GRADIENT grx(x,y) PAR RETROPROJECTION DE IP3x[Q,U] gry(x,y) PAR RETROPROJECTION DE IP3y[Q,U]

268 — COMPOSITION DES IMAGES GRADIENT grx et gry EN UNE IMAGE RESULTAT IR(x,y) DANS L'ESPACE REEL